(19) Europäisches Patentamt
European Patent Office
Office européen des brevets

(11) EP 0 874 027 A2

(12) **EUROPEAN PATENT APPLICATION**

(43) Date of publication:
**28.10.1998 Bulletin 1998/44**

(21) Application number: **98303156.8**

(22) Date of filing: **23.04.1998**

(51) Int Cl.6: **C09D 4/00**, C08F 222/10, C08F 220/36, C09D 4/06, C08F 290/06, D21H 19/58, G03C 1/79, B32B 27/10

(84) Designated Contracting States:
**AT BE CH CY DE DK ES FI FR GB GR IE IT LI LU MC NL PT SE**
Designated Extension States:
**AL LT LV MK RO SI**

(30) Priority: **25.04.1997 JP 109239/97**
**25.04.1997 JP 109336/97**

(71) Applicant: **Oji Paper Company Limited**
**Tokyo 104-0061 (JP)**

(72) Inventors:
- **Fujita, Hirotake, c/o Oji Paper Co., Ltd.**
  **Koto-ku, Tokyo (JP)**
- **Shirai, Kazuhiko, c/o Oji Paper Co., Ltd.**
  **Koto-ku, Tokyo (JP)**
- **Miyata, Tadakazu, c/o Oji Paper Co., Ltd.**
  **Koto-ku, Tokyo (JP)**

(74) Representative: **Harrison, Ivor Stanley et al**
**Withers & Rogers**
**4 Dyer's Buildings**
**Holborn**
**London EC1N 2JT (GB)**

(54) **Electron beam curable resin composition and composite sheet material produced therefrom**

(57) An electron beam-curable resin composition including a mono-functional, electron beam-curable organic compound capable of being converted to a homopolymer having a glass transition temperature (Tg) of 20°C or more, and a di(meth)acrylate, is useful for producing a composite sheet material having a resin coating layer formed from the resin composition and having an excellent softness, a high resistance to cracking upon bending and a high gloss.

EP 0 874 027 A2

## Description

BACKGROUND OF THE INVENTION

1. Field of the Invention

The present invention relates to an electron beam-curable resin composition and an electron beam-cured resin film and a composite sheet material produced from the resin composition. More particularly, the present invention relates to an electron beam-curable resin composition capable of being converted to an electron beam-cured resin having a high softness; an electron beam-cured resin film produced from the resin composition and having a high softness and a composite sheet material comprising an electron beam-cured resin coating layer produced from the resin composition and having high softness, flexibility, stretchability and pliability and a high gloss.

The high softness, flexibility, stretchability and pliability will be represented by a term "a high softness" hereinafter.

2. Description of the Related Art

It is known that a high gloss coated sheet, typically a cast coated paper sheet, can be produced by a process in which a paper sheet substrate is coated with a coating layer comprising, as principal components, a pigment and a binder, the coating layer is, while it contains water and is in plastic condition, brought into contact with a mirror-finished surface at a high temperature under pressure, and is dry-finished, and the resultant composite sheet having the dried high gloss coating layer is separated from the mirror-finished surface. However, the above-mentioned conventional coated sheet is unsatisfactory in the gloss thereof and thus a new type of coated sheet having a further increased gloss has been demanded.

To solve the above-mentioned problem, it has been attempted to produce a sheet material having a high gloss by a laminate-coating method in which a surface of a substrate sheet is coated with a melted resin in the form of a film, the melted resin coating layer is brought into a peripheral surface of a metallic, cylindrical rotor under pressure to cool-solidify the melted resin layer, and the cooled resin layer is separated from the metallic, cylindrical rotor, to produce a composite sheet material having a high gloss coating layer; or by an electron beam-irradiation cast method in which a surface of a substrate sheet is coated with a coating liquid composition comprising, as a principal component, an electron beam-curable organic unsaturated compound, which will be referred to as an electron beam-curable resin composition hereinafter, the resultant coated electron beam-curable resin composition layer is brought into contact with a casting surface, or a peripheral surface of a metallic, cylindrical rotor under pressure, and is cured by applying an electron beam irradiation thereto, and then the resultant composite sheet material having an electron beam-cured resin coating layer is separated from the casting surface or the peripheral surface of the metallic, cylindrical rotor.

The conventional composite sheet material produced by the electron beam irradiation-cast method as mentioned above, which sheet will be referred to as an EB sheet, is advantageous in that the electron beam-cured resin layer surface has a high gloss but is disadvantageous in that the electron beam-cured resin layer per se exhibits a poor softness and thus the composite sheet material exhibits, as a whole, a poor softness, and thus when the electron beam-cured resin layer is bent, cracks or splits are formed in the bent resin layer. This is a big disadvantage of the conventional EB sheet.

As disclosed in Japanese Unexamined Patent Publications No. 60-178447 and No. 61-236547, it has been attempted to enhance the softness of the electron beam-cured resin film by using an electron beam-curable resin composition containing a specific oligomer, polymer or monomer. However, since the relationship between the physical properties of the resin film and the softness of the high gloss EB sheet has not been fully made clear, the result of the attempt was unsatisfactory in the enhancement of gloss. Recently, Japanese Unexamined Patent Publications No. 61-27,075, No. 62-109,046, No. 62-109,047, No. 62-141,541, No. 62-141,542, No. 62-141,543 and No. 6-242,550 have disclosed electron beam-curable resin compositions containing polybutadiene chain-containing compounds and usable for the production of the EB sheet. Also, Japanese Unexamined Patent Publications No. 60-70,446, No. 63-130,608 and No. 2-175,998 disclose electron beam-curable polyurethane-modified, unsaturated organic compounds having a specific molecular weight and containing specific functional groups, which are usable for the production of the EB sheet. However, even when the above-mentioned compositions or compounds are employed, the resultant electron beam-cured resin coatings exhibit a poor resistance to bend-cracking and thus large cracks or splits are formed on the bent coatings. Namely, the above-mentioned prior arts are insufficient to fully solve the above-mentioned problem.

On other hand, methods of curing an electron beam-curable resin composition with a low dose of electron beam irradiation, as disclosed in Kusaki, Report of the Printing Department of the Finance Ministry, No. 57, 1 - 14 (1995) and Kawamura et al., the draft of the 41-st Polymer Forum, 41 (10), 4316 - 4318 (1992), and methods in which electron beam-curable resin compositions comprising, as a principal component, electron beam-curable, unsaturated organic

compounds having a low cross-linking property are used, which are disclosed in W. Orraby and W. K. Walsh, J. Appl. Poly. Sci., (23), 3227 - 3242 (1979), H. C. Miller, Rad. Tech. '90-North America, Vol. 1, 201 - 210 (1990) and Kobayashi, Radiation and Industry, 61, 21 - 25 (1994), disclose that the softness of the cured resin film can be enhanced to a preferred level. However, even in these methods, the enhancement in the softness of the obtained cured resin film is insufficient and the balance of the enhanced softness with the other physical properties of the cured resin film is unsatisfactory. Therefore, the above-mentioned method are still unsatisfactory for practical use in industry. Further, it has been investigated to utilize the technology for producing printing plate materials which are required to have a relatively high softness and disclosed in Japanese Unexamined Patent Publications No. 49-10,910, No. 1-100,535, and No. 6-206,956 and Japanese Examined Patent Publication No. 51-43,374 or the technology for producing coating materials for optical fibers, disclosed in Japanese Unexamined Patent Publications No. 63-85,031, No. 63-215,707 and No. 3-166,217, to provide the EB sheet. However, it was found that even when the above-mentioned technology is utilized, the enhancement in the softness of the resultant EB sheet is unsatisfactory.

Also, Japanese Unexamined Patent Publications No. 5-105,857, No. 5-170,836 and No. 7-310,067 disclose a technology for producing a cured resin having a very high softness and usable for pressure-sensitive adhesives and bonding agents. However, the disclosed resins are insatisfactory in that the resins cannot satisfy the enhanced softness together with all of other physical properties necessary for the EB sheets.

Besides the above-mentioned prior arts, Japanese Unexamined Patent Publications No. 63-85,031, No. 63-215,707, No. 1-92,239, No. 1-100,535, No. 3-296,513, No. 4-288,314, No. 5-9,899, No. 7-310,067 and No. 8-59,759 disclose various types of electron beam-curable resin compositions. However, these resin compositions are unsatisfactory in performance and practical applicability for the EB sheets.

As mentioned above, the prior arts do not impart satisfactory and practical means for enhancing the softness of the electron beam-cured resin films and the EB sheets to a desired level, and for producing the EB sheet having high smoothness and gloss and other necessary physical properties and usable for practical use. Therefore, there is a strong demand for the satisfactory and practical means.

## SUMMARY OF THE INVENTION

An object of the present invention is to provide an electron beam-curable resin composition capable of being converted to an electron beam-cured resin film or coating having an excellent softness, an electron beam-cured resin film produced from the resin composition, and a composite sheet material which is produced by coating at least one surface of a support sheet with the above-mentioned resin composition, and applying an electron beam irradiation to the coated resin composition layer, to form an electron beam-cured resin coating layer on the support sheet and which exhibits a high gloss and a high softness such that even when bent, no cracks or splits are generated in the bent electron beam-cured resin coating layer.

The above-mentioned object can be attained by the electron beam-curable resin composition of the present invention, which comprises a first component comprising at least one mono-functional, electron beam-curable organic compound exhibiting, when polymerized into a homopolymer, a glass-transition temperature of 20°C or more, and a second component comprising at least one di(meth)acrylate compound.

The electron beam-cured resin film of the present invention comprises a electron beam-cured product of the electron beam-curable resin composition of the present invention as mentioned above.

Also, the composite sheet material of the present invention comprises a support sheet and an electron beam-cured resin coating layer formed on at least one surface of the support sheet and comprising an electron beam-cured product of the electron beam-curable resin composition of the present invention as mentioned above.

Further, another type of the composite sheet material of the present invention comprises a support sheet and an electron beam-cured resin composite coating layer formed on at least one surface of the support sheet, and comprising a laminate of a plurality of resin layers including at least an inside resin layer located adjacent to the support sheet and an outermost resin layer located outermost of the composite sheet material, at least one of the plurality of resin layers in the electron beam-cured resin composite coating layer comprising an electron beam-cured product of the electron beam-curable resin composition of the present invention as mentioned above.

In the present invention, the term "a di(meth)acrylate" refers to "a diacrylate or a dimethacrylate".

## DESCRIPTION OF THE PREFERRED EMBODIMENTS

The inventors of the present invention have extensively studied an electron beam-curable resin composition capable of forming an electron beam-cured resin film or coating having a satisfactory softness and crack resistance, and found that when a mono-functional, electron beam-curable organic compound capable of forming a homopolymer having a glass transition temperature (Tg) of 20°C or more is used together with a di(meth)acrylate, the resultant electron beam-curable resin composition can be converted to an electron beam-cured resin having a satisfactory softness and is useful for producing an electron beam-cured resin film having a satisfactory softness and crack resistance and for forming an electron beam-cured resin coating layer having a satisfactory softness and crack resistance on a support sheet.

The present invention was completed on the basis of the finding.

The electron beam-curable resin composition of the present invention which can be converted to an electron beam-cured resin by applying an electron beam irradiation and which is useful for producing an electron beam-cured resin coated composite sheet material having an excellent softness, comprises a first component comprising at least one mono-functional, electron beam-curable organic compound which can be converted to a homopolymer having a glass-transition temperature (Tg) of 20°C or more, and a second component comprising at least one di(meth)acrylate compound.

The mono-functional, electron beam-curable organic compound may be selected from electron beam-curable unsaturated organic compounds having only one ethylenically unsaturated carbon-to-carbon double bond

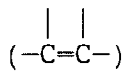,

per molecule of the compounds.

In the electron beam-curable resin composition of the present invention, the mono-functional, electron beam-curable organic compound-containing first component preferably comprises at least one member selected from the class consisting of:

(1) acryloylmorpholine;
(2) (meth)acrylates having a tricyclo[5.2.1.$0^{2,6}$] decane structure and represented by the general formula (1)

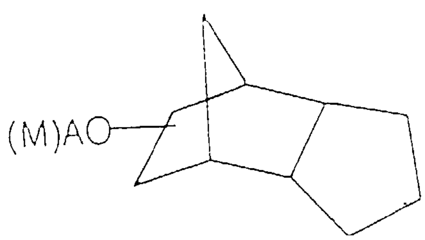

(1)

wherein (M)A represents a (meth)acryloyl group
(3) cycloalkyl mono(meth)acrylates represented by the general formula (2):

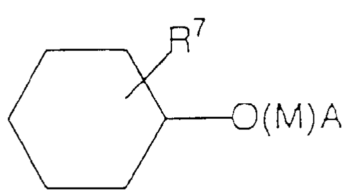

(2)

wherein $R^7$ represents a member selected from the class consisting of a hydrogen atom, and methyl, tert-butyl and cyclohexyl groups, and M(A) represents a (meth)acryloyl group;
(4) mono-(meth)acrylates of tert-alcohols represented by the general formula (3):

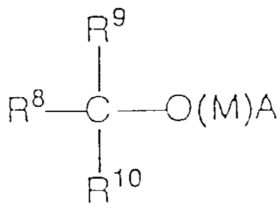

(3)

wherein $R^8$, $R^9$ and $R^{10}$ respectively and independently from each other represent a member selected from the class consisting of methyl and ethyl groups and M(A) represents a (meth)acryloyl group;
(5) (meth)acrylates having a succinimide structure and represented by the general formula (4):

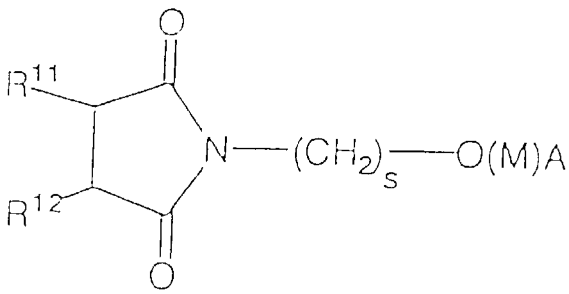

(4)

wherein $R^{11}$ and $R^{12}$ respectively represent a member selected from the class consisting of a hydrogen atom and hydrocarbon groups, which hydrocarbon groups represented by $R^{11}$ and $R^{12}$ may be connected to each other to form, together with two carbon atoms located in the succinimide structure and connected to $R^{11}$ and $R^{12}$, respectively, a member selected from the consisting of cyclohexane and cyclohexene groups; s represents an integer of 2 to 3, and (M)A represents a (meth)acryloyl group;
(6) mono(meth)acrylates having a bis-phenol structure and represented by the general formula (5):

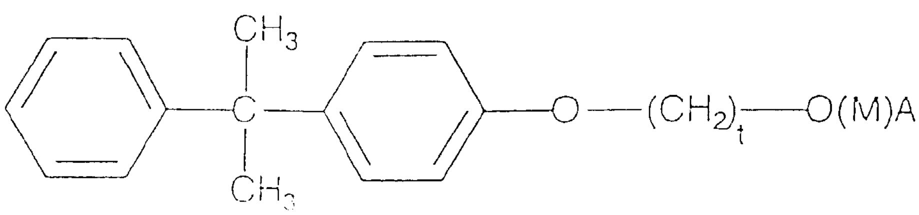

(5)

wherein t represents an integer of 2 to 3, and (M)A represents a (meth)acryloyl group;
(7) (meth)acrylates having a cyclic dicarboxylic acid monoester structure and represented by the general formula (6):

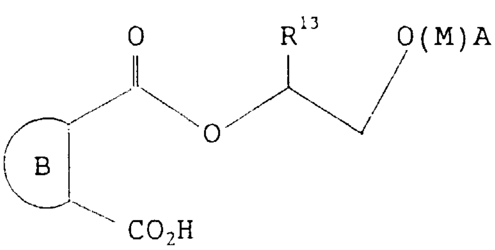

(6)

wherein $R^{13}$ represents a member selected from the class consisting of a hydrogen atom and a methyl group, a cyclic structure B represents a member selected from the class consisting of cyclohexane and benzene rings, and (M)A represents a (meth)acryloyl group; and

(8) N-vinyl lactam compounds represented by the formula (7):

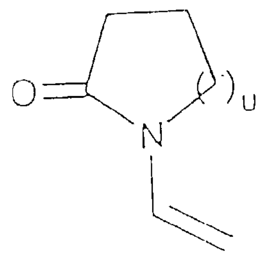

(7)

wherein u represents an integer of 1 or 3. Namely, the formula (7) represents a vinyl 5 or 7-membered lactam.

The above-mentioned mono-functional, electron beam-curable organic compounds are preferably employed together with the di(meth)acrylate compounds for the second component, to impart an excellent softness to an electron beam-cured products of the electron beam-curable resin composition.

In the mono-functional, electron beam-curable organic compounds capable of being converted to a homopolymer having a Tg of 20°C or more and usable for the second component, the mono(meth)acrylates having a trycyclo [5.2.1.$0^{2,6}$] decane structure and represented by the general formula (1), include, for example, dicyclopentanyl acrylate and dicyclopentanyl methacrylate; the cycloalkyl mono(meth)acrylates represented by the general formula (2), include, for example, cyclohexyl acrylate, 2-cyclohexylcyclohexyl (meth)acrylate, 1-methylcyclohexyl (meth)acrylate, 2-methylcyclohexyl (meth)acrylate, 4-methylcyclohexyl (meth)acrylate, 2-tert-butylcyclohexyl (meth)acrylate, and 4-tert-butylcyclohexyl (meth)acrylate.

Also, the mono(meth)acrylates of tert-alcohols represented by the general formula (3) include, for example, tert-butyl acrylate, and tert-amyl (meth)acrylate, the mono(meth)acrylates having a succinimide structure and represented by the general formula (4), include, for example, N-acryloyloxy-1,2,3,6-tetrahydrophthalimide, N-acryloyloxyhexahydrophthalimide and N-acryloyloxy-3,4,5,6-tetrahydrophthalimide, and the mono(meth)acrylates having a bis-phenol structure and represented by the general formula (5), include, for example p-cumylphenol EO-modified acrylate.

Further, the mono(meth)acrylates having a cyclic dicarboxylic acid monoester structure and represented by the general formula (6) include, for example, 2-acryloyloxyethyl hydrogen phthalate, 2-acryloyloxypropyl hydrogen phthalate and 2-acryloyloxypropyl hexahydrogen phthalate, and the N-vinyl lactam compounds represented by the general formula (7) include N-vinyl-2-pyrrolidone and N-vinyl-ε-caprolactam. The mono-functional, electron beam-curable organic compounds usable for the present invention are, however, not limited to the above-illustrated class of compounds.

In the electron beam-curable resin composition of the present invention, the di(meth)acrylates usable as the second component are preferably selected from the class consisting of:

(9) polyetherpolyurethane di(meth)acrylates having a polyether structure having a molecular weight of 500 to 10,000 and represented by the general formula (8):

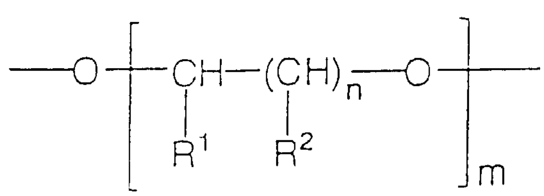

(8)

wherein $R^1$ and $R^2$ respectively and independently from each other represent a member selected from the group consisting of a hydrogen atom and alkyl group having 1 to 5 carbon atoms, n represents an integer of 0 or 1 to 9, m represents an integer satisfying the equation of

$$(n + 1) \times m = 20 \text{ to } 300,$$

and when n represents an integer of 2 or more, the two or more $R^2$ groups may be the same as or different from

each other;

(10) polyesterpolyurethane di(meth)acrylates having a polyester structure having a molecular weight of 500 to 10,000 and represented by the general formula (9):

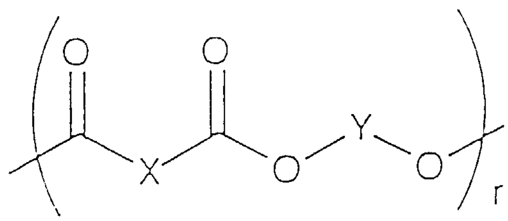

(9)

wherein X represents a residue of a dicarboxylic acid selected from the class consisting of straight chain, branched chain and cyclic aliphatic and aromatic discarboxylic acids and employed in the formation of the polyester structure, Y represents a residue of a diol selected from the class consisting of straight chain, branched chain and cyclic aliphatic and aromatic dioles and employed in the formation of the polyester structure, r represents an integer such that the resultant polyester structure satisfied the molecular weight of 500 to 10,000;

(11) di(meth)acrylates having a dimeric acid structure derived from a dimer of an unsaturated higher fatty acid and selected from those represented by the general formulae (10) and (11):

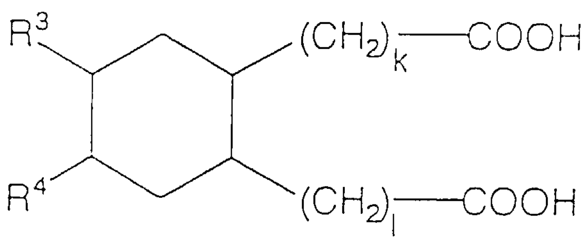

(10)

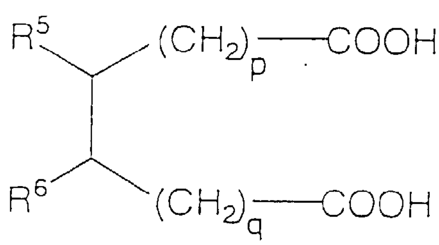

(11)

wherein $R^3$, $R^4$, $R^5$ and $R^6$ respectively and independently from each other represent an alkyl group, k, l, p and q respectively and independently from each other represent an integer of 1 or more, the total of the number of the carbon atoms of the $R^3$ group, the number of the carbon atoms of the $R^4$ group, and k and l is 28, and the total of the number of the carbon atoms of the $R^5$ group, the number of the carbon atoms of the $R^6$ group and p and q is 34, the di(meth)acrylate having a molecular weight of 500 to 10,000;

(12) polyolefinpolyurethane di(meth)acrylates having a polyolefin structure having a molecular weight of 500 to 10,000 and represented by the general formula (12);

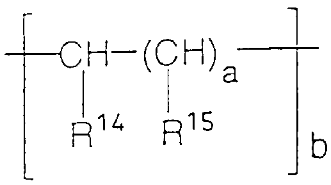

(12)

wherein $R^{14}$ and $R^{15}$ respectively and independently from each other represent a member selected from the class consisting of a hydrogen atom, and methyl and ethyl groups, a represents an integer of l or 2, when a represents an integer of 2, the two $R^{15}$ groups may be the same as or differed from each other, b represents an integer such that the resultant polyolefin structure satisfies the molecular weight of 500 to 10,000; and
(13) polyether di(meth)acrylates having a polyether structure represented by the general formula (13):

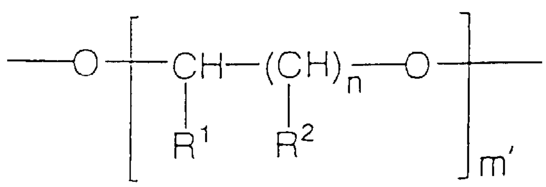

(13)

wherein $R^1$, $R^2$ and n are as defined above, and m' represents an integer satisfying the equation

$$(n + 1) \times m = 8 \text{ to } 200,$$

when n represents an integer of 2 or more, the two or more $R^2$ groups may be the same as or different from each other, the polyether di(meth)acrylates having a molecular weight of 150 to 5,000.

The di(meth)acrylates usable for the second component of the present invention are, however, not limited to the above-illustrated compounds.

In the polyether structure of the general formula (8) of the polyetherpolyurethane di(meth)acrylates, n represents an integer of 0 or 1 to 9, preferably 1 to 4, and m represents an integer satisfying the equation:

$$(n + 1) \times m = 20 \text{ to } 300,$$

preferably $(n + 1) \times m = 30$ to 250. When the value of n is more than 9, the polyether structure of the formula (8) per se is difficult to be synthesized and the synthesis cost is high. When the value of $(n + 1) \times m$ is less than 20, the electron beam-curable resin composition containing the resultant polyetherpolyurethane di(meth)acrylate may be converted to an electron beam-cured resin having a significantly low softness. Also, when the value of $(n + 1) \times m$ is more than 300, the resultant polyetherpolyester di(meth)acrylate may exhibit too a high viscosity and a low flowability and thus may be difficult to handle.

The polyether structure of the general formula (8) has a molecular weight of 500 to 10,000, preferably 600 to 5,000. When the molecular weight of the polyether structure is less than 500, a cured product produced by irradiating an electron beam to a resultant polyetherpolyurethane di(meth)acrylate-containing resin composition may exhibit too a low softness, and thus when the cured product is bent, cracks or splits may be formed on the surface of the bent product. When the molecular weight is more than 10,000, the resultant compound may exhibit an extremely high viscosity and a poor flowability and may be difficult to handle, and a cured product produced by irradiating an electron beam to the resultant polyetherpolyurethane di(meth)acrylate-containing resin composition may exhibit a high tackiness due to an incomplete curing, and thus may be unsuitable in practice.

Among the di(meth)acrylates usable for the present invention, the polyetherpolyurethane di(meth)acrylate having the polyether structure of the formula (8) can be prepared by reacting a polyetherpolyol with a polyisocyanate and a compound having a (meth)acryloyl group.

Namely, the polyetherpolyurethane di(meth)acrylate having the polyether structure of the formula (8) can be prepared by the conventional method as mentioned above. Generally, the polyetherpolyurethane di(meth)acrylate is prepared by reacting a polyetherpolyol with a polyisocyanate and then further reacting with a hydroxy(meth)acrylate. There are no limitations to the types of the polyisocyanates and the hydroxy(meth)acrylates.

The polyetherpolyol usable for the synthesis of the polyetherpolyurethane di(meth)acrylate is not limited to specific type of compounds, as long as the polyetherpolyol can impart the polyether structure of the general formula (8) to the resultant di(meth)acrylate compound, and is preferably selected from polyethyleneglycol, 1,2-polypropyleneglycol, 1,3-polypropyleneglycol, polytetramethyleneglycol, 1,2-polybutyleneglycol, polyisobutyleneglycol and polytetrahydrofuranpolyol. Also, other types of polyols consisting of block and random copolymers of the above-mentioned polyetherpolyols with other compounds can be used for the synthesis of the polyetherpolyurethane di(meth)acrylates.

Also, the polyisocyanates to be reacted with the above-mentioned polyetherpolyols are preferably selected from 2,4-tolylenediisocyanate, 2,6-tolylenediisocyanate, 1,3-xylylenediisocyanate, 1,4-xylylenediisocyanate, 1,5-naphthalenediisocyanate, p-phenylenediisocyanate, 4,4'-diphenylmethanediisocyanate, 3,3'-dimethyl-4,4'-diphenylmethanediisocyanate, 4,4'-biphenylenediisocyanate, hexamethylenediisocyanate, isophoronediisocyanate, dicyclohexylmethanediisocyanate, methylene-bis(4-cyclohexylisocyanate), hydrogenerated diphenylmethanediisocyanate, 2,2,4-trimethylhexamethylenediisocyanate, bis(2-isocyanatoethyl) fumarate, 6-isopropyl-1,3-phenyldiisocyanate, 4-diphenylpropanediisocyanate, and lysinediisocyanate. Among these polyisocyanates mentioned above, 2,6-tolylenediisocyanate, isophoronediisocyanate and 4,4'-diphenylmethanediisocyanate are more preferably employed.

The hydroxy(meth)acrylates usable for the synthesis of the polyetherpolyurethane di(meth)acrylate having the polyether structure of the general formula (8) are preferably selected from, for example, 2-hydroxyethyl (meth)acrylate, 2-hydroxypropyl (meth)acrylate and 2-hydroxy-3-phenoxypropyl (meth)acrylate. Among these compounds, 2-hydroxyethyl(meth)acrylate is more preferably employed.

The polyetherpolyurethane di(meth)acrylates having the polyether structure of the general formula (8) and usable for the present invention preferably have a molecular weight of 700 to 10,000, more preferably 700 to 6,000.

The polyetherpolyurethane di(meth)acrylates usable for the present invention include polyurethanediacrylates of polyethyleneglycols, polyurethanediacrylates of polypropyleneglycols and polyurethanediacrylates of tetramethyleneglycols. Also, as trade chemicals, CJ8 series and CJ11 series (made by Nihon Kasei K.K.) and PPG series and PTMG series (made by ARAKAWA KAGAKUKOGYO K.K.) polyetherpolyurethane di(meth)acrylate products can be used for the present invention.

The polyetherpolyurethane di(meth)acrylates usable for the present invention are not limited to the above-illustrated compounds.

In the first component of the electron beam-curable resin composition of the present invention, the polyetherpolyurethane di(meth)acrylates having the polyether structure of the general formula (8) are employed alone or in a mixture of two or more thereof.

In the formula (8) showing the polyether structure, as long as the values of n and m satisfy the definition as mentioned above, the repeating units in the polyether structure may be divided by at least one aromatic polyol residue, for example, by at least one member selected from bisphenol A residue, bisphenol F residue and bisphenol S residue, into two or more blocks.

In the formula (13) representing the polyether structure of the polyether di(meth)acrylates usable for the present invention, n represents O or an integer of 1 to 9, preferably an integer of 1 to 4, and m' is an integer satisfying the equation:

$$(n + 1) \times m' = 8 \text{ to } 200, \text{ preferably } (n + 1) \times m' = 12 \text{ to } 200.$$

When n is more than 9, the polyether structure per se may be difficult to synthesize, and the synthesis cost may be too high. Also, when the value of (n + 1) x m' is less than 8, the electron beam-cured product from the resultant electron beam-usable resin composition may exhibit too a low softness. Also, when the value of (n + 1) x m' is more than 200, the resultant compound may exhibit too a high viscosity and a low flowability, and thus the resultant electron beam-curable resin composition may be difficult to handle.

Accordingly, the molecular weight of the polyether structure is 150 to 5,000, preferably 250 to 1,000. When the molecular weight of the polyether structure is less than 150, the electron beam-cured product from the resultant polyether di(meth)acrylate-containing electron beam-curable resin composition may exhibit an unsatisfactory softness, and thus when the electron beam-cured product is bent, cracks nor splits may be created on the bent product surface. Also, when the molecular weight is more than 5,000, the resultant polyether di(meth)acrylate may exhibit an extremely high viscosity and low flowability, and thus not only may the resultant electron beam-curable resin composition be difficult to apply to a support sheet, but also the resultant electron beam-cured product may exhibit a high tackiness due to an incomplete curing and thus may be difficult to employ in practice.

Further, in the general formula (13) for the polyether structure, as long as n and m satisfy the definition as mentioned

above, the repeating units of the polyether structure may be divided each into two or more blocks by an aromatic polyol residue, for example, a bisphenol A, bisphenol F or bisphenol S residue.

In the di(meth)acrylates usable for the present invention, the polyether di(meth)acrylates having the polyether structure represented by the general formula (13), are not limited to specific compounds, as long as the polyether structure satisfies the general formula (13). Preferably, the polyether di(meth)acrylates are selected from, for example, di(meth)acrylate of polyethyleneglycol, di(meth)acrylate of 1,2-polypropyleneglycol, di(meth)acrylate of 1,3-polypropyleneglycol, di(meth)acrylate of polytetramethyleneglycol, di(meth)acrylate of 1,2-polybutyleneglycol, di(meth)acrylate of polyisobutyleneglycol, di(meth)acrylate of polytetrahydrofurandiol, di(meth)acrylates of alkylene oxide adducts of diols, for example, adducts of ethylene oxides, propylene oxides and/or butylene oxides with bisphenol A, bisphenol F and/or bisphenol S, and di(meth)acrylates of the hydrogeneration derivatives of the diol compounds having the bisphenol skeleton as mentioned above. Also, the polyether di(meth)acrylates include di(meth)acrylates of diols consisting of block and random copolymers of the polyetherpolyol compounds as mentioned above with other compounds.

The polyether di(meth)acrylates having the polyether structure of the general formula (13) may be selected from diacrylate of polyethyleneglycol and diacrylate of polypropyleneglycol. Also as trade chemicals, for example, ARONIX M-200 series (made by TOA GOSEI K.K.) KAYARAD PEG DA series (made by NIHON KAYAKU K.K.), BLENMER PDE-400 (made by NIHON YUSHI K.K.), and NEW FRONTIER PE series and NEW FRONTIER BPE series (made by DAIICHI KOGYOSEIYAKU K.K.) polyether di(meth)acrylate products can be used. However, these chemicals are merely representative and do not limit the scope of the polyether di(meth)acrylates usable for the present invention.

The polyether di(meth)acrylates having the polyether structure of the general formula (13) are employed alone or in a mixture of two or more thereof.

The polyesterpolyurethane di(meth)acrylates usable for the di(meth)acrylate-containing second component of the present invention, have a polyester structure represented by the general formula (9) and having a molecular weight of 500 to 10,000.

The molecular weight of the polyester structure of the general formula (9) is preferably in the range of from 500 to 10,000, more preferably from 1,000 to 5,000. When the molecular weight of the polyester structure is less than 500, the cured product produced by irradiating an electron beam onto a resin composition containing the resultant polyesterpolyurethane di(meth)acrylate may exhibit a poor softness and, when the cured product is bent, cracks or splits may be formed on the surface of the bent product. Also, when the molecular weight is more than 10,000, the resultant di (meth)acrylate compound may exhibit an extremely high viscosity and thus may be difficult to handle, and the cured product produced by irradiating an electron beam onto the resin composition containing the resultant di(meth)acrylate compound may exhibit a high tackiness due to an incompleted curing and thus cannot be used for practice.

The polyesterpolyurethane di(meth)acrylate having the polyester structure of the general formula (9) is used as an electron beam-curable oligomer for the present invention, and is produced by reacting polyesterpolyols with polyisocyanates and compounds having a (meth)acryloyl group.

As mentioned above, the polyesterpolyurethane di(meth)acrylates having the polyester structure of the general formula (9) and usable for the present invention can be produced by a conventional method. Generally, the compounds are synthesized by reacting the polyesterpolyols with the polyisocyanates and then further reacting with hydroxy(meth) acrylates. There are no limitations to the types of the polyisocyanates and the hydroxy(meth)acrylates to be used for the synthesis.

To the type of the polyestepolyols usable for the synthesis of the polyesterpolyurethane di(meth)acrylates, there is no limitation, as long as the polyesterpolyols have the polyester structure represented by the general formula (9).

The polyesterpolyols are prepared by an esterification reaction of at least one diol with at least one dicarboxylic acids. The diols are preferably selected from aliphatic dioles, for example, ethyleneglycol, 1,2-propanediol, 1,3-butanediol, 1,4-butanediol, 1,5-pentanediol, neopentylglycol, isopreneglycol, 1,6-hexanediol, 2-methyl-2,4-pentanediol, 3-methyl-1,5-pentanediol, hexyleneglycol, and 2,5-dimethyl-2,5-hexanediol; aromatic diols, for example, catechol, resorcinol, hydroquinone, 4-tert-butyl catechol, 2-tert-butyl catechol, 1,4-dihydroxynaphthalene, p-hydroxyphenethyl alcohol, bisphenol A, bisphenol F and bisphenol F; and cycloaliphatic diols, for example, hydrogenerated bisphenol A, hydrogenerated bisphenol F and hydrogenerated bisphenol S. The dicarboxylic acids are preferably selected from aliphatic dicarboxylic acids, for example, oxalic acid, malonic acid, succinic acid, glutaric acid and adipic acid; aromatic dicarboxylic acids, for example, phthalic acid, isophthalic acid and terephthalic acid; and cycloaliphatic dicarboxylic acids, for example, hydrogenerated phthalic acid. Also, the polyesterpolyols include block and random copolymers of the polyesterpolyols as mentioned above with other compounds.

As a diol component for producing the above-mentioned polyesterpolyols, aliphatic diols for example, ethyleneglycol, 1,3-propyleneglycol, 1,4-butanediol, neopentylglycol and 1,4-hexanediol, are more preferably employed.

As a dicarboxylic acid component for producing the above-mentioned polyesterpolyols, aliphatic dicarboxylic acids, particularly adipic acid is more preferably employed.

The polyesterpolyurethane di(meth)acrylates usable for the present invention and having the polyester structure represented by the general formula (9), may be selected from urethanediacrylates of polypropyleneglycoladipates,

urethanediacrylates of polybutyleneglycoladipates, urethanediacrylates of polyneopentylglycoladipates, and urethanediacrylates of polypropyleneglycolphthalates, and trade chemicals, for example, PG series, NP series and IP series (made of ARAKAWA KAGAKUKOGYO K.K.) and DIABEAM UK-6000 series (made by MITSUBISHI RAYON K.K.) polyetherpolyurethane di(meth)acrylate products. However, the polyesterpolyurethane di(meth)acrylates usable for the present invention are not limited to those illustrated above.

The polyesterpolyurethane di(meth)acrylates usable for the present invention and having the specific polyether structure of the formula (9) in each molecular thereof are employed alone or in a combination of two or more thereof.

In the second component for the present invention, di(meth)acrylates having a dimeric acid structure selected from those of the general formulae (10) and (11), and derived from dimers of unsaturated higher fatty acids can be used.

The dimeric acid structure of the above-mentioned di(meth)acrylates, represented by the general formulae (10) and (11) is derived from the dimers (namely dimeric acids) of higher unsaturated fatty acids, and having two long chain alkyl groups and contains 36 carbon atoms in total. This type of di(meth)acrylate having the dimeric acid structure can be prepared by polymerizing an unsaturated higher fatty acid containing linoleic acid, for example, safflower oil, soybean oil, linseed oil and tall oil by a conventional method, to provide a dimeric acid; and reacting the dimeric acid with an epoxy compound, and then with a (meth)acrylic acid. Also, the di(meth)acrylates having the dimeric acid structure can be produced by reacting the dimeric acid with an epoxy compound, then with a polyisocyanate compound and finally with a hydroxy(meth)acrylic acid to produce a di(meth)acrylate of the dimeric acid. Alternatively, the dimeric acid is reduced to provide a dimeric diol, and the resultant dimeric diol is reacted with a polyisocyanate and then with a hydroxy (meth)acrylate, to introduce an urethane structure into the final product. Further, the di(meth)acrylate having the polyester group-containing dimeric acid structure can be produced by reacting the above-mentioned dimeric diol with a polybasic acid and further reacting the resultant reaction product with a (meth)acrylic acid.

The dimerization reaction product derived from the above-mentioned natural unsaturated higher fatty acid is a mixture of the dimers of the general formulae (10) and (11). Usually, the cycloaliphatic polybasic acid of the general formula (10) and the branched chain polybasic acid are present in a weight mixing ratio of about 60/40 to about 80/20. The composition of the dimerized reaction product is variable in response to the reaction conditions of the dimeric acid production. The resultant dimeric acid may contain, even after the preparation thereof, residual unsaturated bonds. In this case, the unsaturated bonds may be reduced to saturated bonds.

The di(meth)acrylates usable for the present invention having the dimeric acid structure preferably have a molecular weight of 500 to 10,000, more preferably 1,000 to 5,000. When the molecular weight of the di(meth)acrylates having the dimeric acid structure is less than 500, the resultant di(meth)acrylate-containing electron beam-curable resin composition may cause the electron beam-cured product resulted from the resin composition to exhibit a low softness and thus when the electron beam-cured product is bent, cracks or splits may be formed on the surface of the bent product. Also, if the molecular weight is more than 10,000, the resultant compounds may exhibit an extremely high viscosity and thus a very low flowability and a poor handling property. Also, when the compound-containing resin composition is cured by an electron beam irradiation, the resultant cured product may exhibit a high tackiness due to incomplete curing, and thus cannot be used in practice.

The di(meth)acrylates having the dimeric acid structures of the general formulae (10) and (11) may be selected from epoxy-modified dimeric acid diacrylates and ester-modified dimeric acid diacrylates and trade chemicals available under the trademarks of, for example, DA series (produced by ARAKAWA KAGAKUKOGYO K.K.), and are not limited to those illustrated above.

The di(meth)acrylates having the dimeric acid structure may be used alone or in a combination of two or more thereof.

In the second composition of the resin composition of the present invention, the polyolefinpolyurethane di(meth) acrylates provided with the polyolefin structure represented by the general formula (12) and having a molecular weight of 500 to 10,000, can be used.

The molecular weight of the polyolefin structure of the formula (12), of the di(meth)acrylates usable for the present invention is preferably in the range of from 500 to 10,000, more preferably 1,000 to 5,000, to make sure that the resultant electron beam-cured product, for example, the electron beam-cured resin coating layer of the composite sheet material, exhibits a satisfactory softness. When the molecular weight of the polyolefin structure is less than 500, the resultant di(meth)acrylates may cause the resultant resin composition containing the di(meth)acrylate to produce an electron beam-cured product having a poor softness, and thus when the electron beam-cured product is bent, cracks or splits may be formed on the surface of the bent product. Also, when the molecular weight is more than 10,000, the resultant di(meth)acrylates may exhibit an extremely high viscosity and thus a low flowability and a poor handling property. Also, when the resultant di(meth)acrylate-containing resin composition is cured by an electron beam irradiation, the cured product may exhibit a high tackiness due to incomplete curing, and thus cannot be employed in practice.

Accordingly, the b in the general formula (12) is an integer showing a degree of polymerization of the olefin unit and causing the molecular weight of the polyolefin structure of the formula (11) to fall within the range of from 500 to 10,000.

The di(meth)acrylate having the polyolefin structure of the formula (12) usable for the present invention can be prepared by reacting straight chain or branched chain alkyldiols with polyisocyanates and further reacting the resultant reaction product with hydroxy(meth)acrylates.

The straight chain or branched chain alkyldiols include diols of polyolefins selected from polyethylene, polypropylene and hydrogenerated 1,2-polybutadiene.

The polyolefinpolyurethane di(meth)acrylates having the polyolefin structure of the formula (12) include urethanediacrylates of polyethylenediols and urethanediacrylates of hydrogenated polybutadienediols, and trade chemicals available under the trademarks of, for example, KU511 series (produced by ARAKAWA KAGAKUKOGYO K.K.) and TEAI series (made by NIHON SODA K.K.) polyolefinpolyurethane di(meth)acrylate products, but are not limited to those illustrated above.

The di(meth)acrylates having the polyolefin structure of the formula (12) usable for the present invention may be employed alone or in a combination of two or more thereof.

In the electron beam-curable resin composition of the present invention, a first component comprising at least one mono-functional electron beam-curable organic compound which can be converted to a homopolymer having a Tg of 20°C or more and a second component comprising at least one di(meth)acrylate are mixed preferably in a weight mixing ratio of 90/10 to 10/90, more preferably 80/20 to 20/80. This type of electron beam-curable resin composition, of the present invention, enables the electron beam-cured products, for example, electron beam-cured films to exhibit an ultimate elongation of 100% or more, and thus the composite sheet material having an electron beam-cured resin coating layer to exhibit an excellent softness.

When the content of the di(meth)acrylate-containing second component in the electron beam-curable resin composition is more than 90% by weight based on the total weight of the electron beam-curable unsaturated organic compounds present in the resin composition, the resultant resin composition may exhibit too a high viscosity, and may be difficult to handle, and/or the resultant cured product surface may exhibit an undesired tacky feeling. Also, when the content of the di(meth)acrylate-containing second component in the resin composition is less than 10% by weight based on the total weight of the electron beam-curable unsaturated organic compounds present in the resin composition, the resultant electron beam-cured product may exhibit a low softness and a high brittleness, and thus the cured product, for example, a cured coating layer, may be easily cracked or split by bending.

In an embodiment of the electron beam-curable resin compositions of the present invention, the mono-functional, electron beam-curable organic compound-containing first component comprises acryloylmorpholine, and the di(meth) acrylate-containing second component comprises at least one member selected from the class consisting of the polyetherpolyurethane di(meth)acrylates having the polyether structure having a molecular weight of 500 to 10,000 and represented by the general formula (8); the polyesterpolyurethane di(meth)acrylates having the polyester structure having a molecular weight of 500 to 10,000 and represented by the general formula (9); and the di(meth)acrylates having a molecular weight of 500 to 10,000 and provided with a dimeric acid structure represented by a member selected from the general formulae (10) and (11) and derived from a dimer of an unsaturated higher fatty acid.

In another embodiment of the electron beam-curable resin compositions of the present invention, the mono-functional, electron beam-curable organic compound-containing first component comprises a mono(meth)acrylate having a tricyclo[5.2.1.0$^{2,6}$] decane structure represented by the formula (1), and the di(meth)acrylate-containing second component comprises at least one member selected from the class consisting of the polyetherpolyurethane di(meth)acrylates having the polyether structure having the molecular weight of 500 to 10,000 and represented by the formula (8); the polyesterpolyurethane di(meth)acrylates having the polyester structure represented by the general formula (9) and having the molecular weight of 500 to 10,000; and the polyolefinpolyurethane di(meth)acrylates having the polyolefin structure represented by the formula (12) and having the molecular weight of 500 to 10,000.

In another embodiment of the electron beam-curable resin compositions of the present invention, the mono-functional, electron beam-curable organic compound-containing first component comprises a cycloalkyl mono(meth)acrylate represented by the general formula (2); and the di(meth)acrylate-containing second component comprises at least one member selected from the class consisting of the polyetherpolyurethane di(meth)acrylates having the polyether structure represented by the general formula (8) and having the molecular weight of 500 to 10,000, the polyesterpolyurethane di(meth)acrylates having the polyester structure represented by the general formula (9) and having the molecular weight of 500 to 10,000, and the polyolefinpolyurethane di(meth)acrylates having the polyolefin structure represented by the general formula (12) and having the molecular weight of 500 to 10,000.

In an embodiment of the electron beam-curable resin compositions of the present invention, the mono-functional, electron beam-curable organic compound-containing first component comprises a mono(meth)acrylate of a tert-alcohol, represented by the general formula (3); and the di(meth)acrylate-containing second component comprises at least one member selected from the class consisting of the polyetherpolyurethane di(meth)acrylate having the polyether structure represented by the general formula (8) and having a molecular weight of 500 to 10,000, the polyesterpolyurethane di(meth)acrylate having the polyester structure represented by the general formula (9) and having the molecular weight of 500 to 10,000, and the polyolefinpolyurethane di(meth)acrylates having the polyolefin structure represented by the general formula (12) and having the molecular weight of 500 to 10,000.

In another embodiment of the electron beam-curable resin compositions of the present invention, the mono-functional, electron beam-curable organic compound-containing first component comprises a mono(meth)acrylate having the succinimide structure and represented by the general formula (4); and the di(meth)acrylate-containing second component comprises at least one member selected from the class consisting of the polyetherpolyurethane di(meth) acrylates having the polyether structure represented by the general formula (8) and having the molecular weight of 500 to 10,000, the polyesterpolyurethane di(meth)acrylate having the polyester structure represented by the general formula (9) and having the molecular weight of 500 to 10,000, and the di(meth)acrylates provided with a dimeric acid structure derived from a dimer of an unsaturated higher fatty acid and selected from those represented by the general formulae (10) and (11), and having a molecular weight of 500 to 10,000.

In another embodiment of the electron beam-curable resin compositions of the present invention, the mono-functional, electron beam-curable organic compound-containing first component comprises a mono(meth)acrylate having a bisphenol structure and represented by the general formula (5); and the di(meth)acrylate-containing second component comprises at least one member selected from the class consisting of the polyetherpolyurethane di(meth)acrylates having the polyether structure represented by the general formula (8) and having a molecular weight of 500 to 10,000, the polyesterpolyurethane di(meth)acrylate having the polyester structure represented by the general formula (9) and having the molecular weight of 500 to 10,000, and the polyolefinpolyurethane di(meth)acrylates having the polyolefin structure represented by the general formula (12) and having the molecular weight of 500 to 10,000.

In another embodiment of the electron beam-curable resin compositions of the present invention, the mono-functional, electron beam-curable organic compound-containing first component comprises a mono(meth)acrylate having a cyclic dicarboxylic acid monoester structure and represented by the general formula (6); and the di(meth)acrylate-containing second component comprises at least one member selected from the class consisting of the polyetherpolyurethane di(meth)acrylate having the polyether structure represented by the general formula (8) and having the molecular weight of 500 to 10,000, the polyesterpolyurethane di(meth)acrylate having the polyester structure represented by the general formula (9) and having the molecular weight of 500 to 10,000.

In another embodiment of the electron beam-curable resin compositions of the present invention, the mono-functional, electron beam-curable organic compound-containing first component comprises a N-vinyl lactam compound represented by the general formula (7); and the di(meth)acrylate-containing second component comprises at least one member selected from the class consisting of the polyetherpolyurethane di(meth)acrylate having the polyether structure represented by the general formula (8) and having the molecular weight of 500 to 10,000, the polyesterpolyurethane di(meth)acrylate having the polyester structure represented by the general formula (9) and having the molecular weight of 500 to 10,000, and the di(meth)acrylates provided with a dimeric acid structure derived from a dimer of an unsaturated higher fatty acid and selected from those represented by the general formulae (10) and (11), and having a molecular weight of 500 to 10,000.

In a still another embodiment of the electron beam-curable resin compositions of the present invention, the mono-functional, electron beam-curable organic compound-containing first component comprises acryloylmorpholine, and the di(meth)acrylate-containing second component comprises a polyether di(meth)acrylate provided with the polyether structure represented by the formula (13) and having the molecular weight of 150 to 5,000, the mixing ratio in weight of the first component to the second component being in the range of from 51/49 to 90/10, preferably 85/15 to 51/49. In this embodiment, when the first and second components are employed in the mixing weight ratio in the above-mentioned range, the ultimate elongation of the electron beam-cured resin film from which an electron beam-cured resin coating layer of the composite sheet material is formed, can be controlled to a level of 50% or more, and thus the composite sheet material having the electron beam-cured resin coating layer and exhibiting a softness high sufficient to practical use can be obtained.

In the above-mentioned electron beam-curable resin composition containing the polyether di(meth)acrylate having the polyether structure of the general formula (13), when the content of the polyether di(meth)acrylate containing second component is more than 49% by weight based on the total weight of the electron beam-curable unsaturated organic compounds, the resultant electron beam-curable resin composition causes the electron beam-cured resin coating layer formed from the resin composition by the electron beam irradiation to have unsatisfactory Young's modulus and ultimate elongation, and thus to exhibit an extremely decreased dynamic performance and a low applicability to practical use. Also, when the content of the polyether di(meth)acrylate is less than 10% by weight, the resultant electron beam-cured resin film or coating layer may exhibit a low softness and an increased brittleness and thus may be easily cracked or split by bending.

In the electron beam-curable resin composition of the present invention, the mono-functional, electron beam-curable organic compounds which can be converted, when homopolymerized, to homopolymers having a glass transition temperature (Tg) of 20°C or more, and usable for the first component, are preferably selected from, as mentioned above, acryloylmorpholine; mono(meth)acrylates having a tricyclo[5.2.1.$0^{2,6}$] decane structure of the general formula (1); cycloalkyl mono(meth)acrylates of the general formula (2); mono(meth)acrylates of tert-alcohols of the general

formula (3); mono(meth)acrylates of the succinimide structure and represented by the general formula (4); mono(meth) acrylates having the bisphenol structure and represented by the general formula (5); mono(meth)acrylates having the cyclic dicarboxylic acid monoester structure and represented by the general formula (6); and N-vinyl lactam corresponds of the general formula (7). These compounds may be employed alone and in a mixture of two or more thereof.

In the present invention, the di(meth)acrylates usable for the second component of the electron beam-curable resin composition are used together with the first component comprising at least one mono-functional, electron beam-curable organic component capable of being converted to a homopolymer with a Tg of 20°C or more. The di(meth) acrylates are preferably selected from, as mentioned above, polyetherpolyurethane di(meth)acrylates having the polyether structure represented by the general formula (8); polyesterpolyurethane di(meth)acrylates having the polyester structure of the general formula (9); di(meth)acrylates having a dimeric acid structure represented by the general formula (10) or (11); the polyolefinpolyurethane di(meth)acrylates having the polyolefin structure of the general formula (12); and polyether di(meth)acrylates having the polyether structure represented by the general formula (13). These compounds may be employed alone or in a mixture of two or more thereof.

Even in the case where the first component comprises two or more mono-functional, electron beam-curable organic compounds and the second component comprises two or more di(meth)acrylate compounds, the mixing ratio in weight of the first component to the second component is preferably in the range of from 90/10 to 10/90, more preferably from 80/20 to 20/80. When the first and second components are present in the above-mentioned mixing weight ratio, the resultant electron beam-cured resin film or coating layer exhibits a high softness which is sufficient to impart a high softness to the composite sheet material.

Among the above-mentioned mono-functional, electron beam-curable organic compounds for the first component, when ACMO, the mono(meth)acrylates of the general formula (4) having the succinimide structure, or the N-vinyl lactam compounds of the general formula (7) are employed for the first component, the di(meth)acrylates for the second component are preferably selected from those exhibiting a hydrophobicity as low as possible and those provided with substituents with a high hydrophilicity.

However, in the case where a di(meth)acrylate having a high hydrophobicity, for example, a polyolefine di(meth) acrylate, is used in combination with a mono-functional, electron beam-curable organic compound having a high hydrophilicity, these component compounds are preferably employed together with at least one member selected from the mono-functional, electron beam-curable organic compounds and having a relatively high hydrophobicity and/or at least one member selected from the di(meth)acrylates and having a relatively low hydrophobicity, to enhance the solubility and uniformity of the resin composition and the compatibility and uniformity of the electron beam-cured product.

Further, in the electron beam-curable resin composition, at least one additional member selected from mono-functional, electron beam-curable organic compounds which can be converted to a homopolymer having a Tg of 20°C or less and tri-, or more, functional (meth)acrylates may be contained in an amount which causes the resultant electron beam-cured product to exhibit a satisfactory softness. In this case, the additional member is preferably in an amount of 10 parts by weight or less per 100 parts by weight of the electron beam-curable resin composition.

The composite sheet material of the present invention comprises a support sheet and an electron beam-cured resin coating layer formed on at least one surface of the support sheet and comprising an electron beam-cured product of an electron beam-curable resin composition of the present invention. The electron beam-cured resin coating layer preferably has an ultimate elongation of 50% or more.

Another composite sheet material of the present invention comprises a support sheet and an electron beam-cured resin composite coating layer formed on at least one surface of the support sheet and comprising a laminate of a plurality of resin layers including at least an inside resin layer located adjacent to the support sheet and an outermost resin layer located outermost of the composite sheet material, at least one of the plurality of resin layers in the electron beam-cured resin composite layer comprising an electron beam-cured product of the electron beam-curable resin composition of the present invention as mentioned above.

Preferably, the inside resin layer bonded to the support sheet comprises the electron beam-cured product of the electron beam-curable resin composition of the present invention.

In this type of composite sheet material of the present invention, the electron beam-cured resin composite coating layer preferably has an ultimate elongation of 50% or more.

To enhance the smoothness and gloss of the composite sheet material of the present invention, the electron beam-cured resin coating layer is preferably formed by a cast EB method. The cast EB method will be illustrated below in detail.

A surface of a support sheet is coated with a resin coating layer-forming electron beam-curable resin composition, to form a coated liquid layer.

The coated liquid layer on the support sheet is superposed on a surface of a rotating cylindrical casting drum or a casting sheet material having a high smoothness and gloss. Then the coated liquid layer superposed on a high smoothness and gloss casting surface is subjected to an irradiation of an electron beam, to be cured and to cause the resultant cured resin layer to be firmly bonded to the support sheet. The resultant laminate is separated from the casting

surface. The above-mentioned composite sheet material-producing method is referred to as a direct coating method.

In another method, a resin coating layer-forming electron beam-curable resin composition is coated on a high smoothness and gloss surface of the above-mentioned casting drum or sheet, to form a coated liquid layer on the surface. Then, a surface of a support sheet is superposed on the surface of the coated liquid layer on the casting surface. An electron beam is irradiated toward the coated liquid layer through the support sheet, to cure the coated liquid layer and to firmly bond the resultant cured resin layer to the support sheet.

The resultant laminate is separated from the casting surface, to obtain a composite sheet material. This method is referred to as a transfer coating method.

The support sheet usable for the composite sheet material of the present invention is not limited to a specific type of sheet materials, and may be selected from paper sheets, for example, woodfree paper sheets, plastic films, woven or knitted fabrics, nonwoven fabrics and metallic foils, for example, aluminum foils, each having a relatively small thickness, for example, of 6 to 500 μm. Preferably, the paper sheets are used for the support sheet. There is no limitation to the type of the paper sheets for the support sheet. Preferably, the paper sheets have a basis weight of 50 to 300 g/$m^2$ and a high surface smoothness. As a pulp for forming the paper sheets, generally, natural pulps including softwood pulps, for example, fir and Japanese oak wood pulps; hardwood pulps, for example, maple, Japanese beech and poplar wood pulps; and mixtures of the softwood and hardwood pulps, are mainly used. The natural pulps include bleached pulps, for example, kraft pulps, sulfite pulps and soda pulps. Also, paper sheets made from a mixed pulp containing synthetic fibers and/or synthetic pulps may be used for the support sheet. The above-mentioned paper sheets optionally contain at least one member selected from usual additives, for example, dry paper strength-enhancing agents, sizing agents, fillers, wet paper strength-enhancing agents, fixing agents, and pH value-regulators.

The support sheet usable for the composite sheet material of the present invention may be selected from pigment coated paper sheets such as coated paper sheets, cast-coated paper sheets and art paper sheets, in each of which one or two surfaces of a paper sheet, for example, woodfree paper sheet are coated with a pigment coating layer comprising, as a main component, a pigment, for example, clay, talc, kaolin, calcium carbonate, aluminum hydroxide, titanium dioxide, magnesium hydroxide, or plastic pigment, and a synthetic resin binder, for example, an acrylic resin, polyurethane resin, ethylene-acrylic acid copolymer resin, vinyl acetate-ethylene copolymer resin, styrene-butadiene copolymer resin or polyvinylidene chloride resin. Alternatively, the support sheet may be a laminate paper sheet produced by laminate-coating one or two surfaces of a paper sheet with a polyolefin resin, for example, polyethylene resin.

In the composite sheet material of the present invention, a support sheet comprising a plastic film or a synthetic paper sheet may be utilized. For example, a plastic film formed from a thermoplastic resin composition containing a polyolefin resin, for example, polypropylene resin or polyethylene resin may be used as a support sheet. Also, a synthetic paper sheet produced from a synthetic resin film and having a paper-like surface may be used as a support sheet. The plastic films or synthetic paper sheets usable for the support sheet, may include at least one member selected from white pigments, for example, clay, talc, kaolin, calcium carbonate, titanium dioxide and magnesium hydroxide; metal soaps, for example, zinc stearate; dispersing agents, for example, various surfactants; and coloring pigments.

In the above-mentioned direct and transfer coating methods, the casting sheet material which is used as a casting base, is not limited to a specific type of sheet materials. Generally, the casting sheet material is preferably selected from plastic films, for example, polyester films, metallic sheets, resin-coated paper sheets, metallized films, and metallized paper sheets. Also, a releasing agent such as a silicone or wax may be applied to the casting sheet surface to made the separation of the cured resin coating layer from the casting surface easy. Also, the casting sheet may be formed into the form of an endless belt form and repeatedly used.

The metallic cylindrical rotating drum usable as a casting base in the direct or transfer-casting method is not limited to those having a specific form and made from a specific material, and thus may be a rotating drum made from, for example, a stainless steel, copper or chromium and having a mirror-finished smooth peripheral surface. Also, to make the separation of the cured resin coating layer from the casting surface easy, a releasing agent such as silicone or wax may be applied to the peripheral surface of the rotating drum.

In a procedure for applying an electron beam-curable resin composition to a casting surface of the metallic cylindrical rotating drum or to a surface of the support sheet, a coating method, for example, bar-coating method, air doctor-coating method, blade-coating method, squeeze-coating method, air knife-coating method, roll-coating method, gravure-coating method, transfer coating method, comma coating method, smoothing coating method, microgravure coating method, reverse roll coating method, multi-roll coating method, dip-coating method, biss coating method, gate roll-coating method, curtain fall coating method, slide coating method, fountain coating method or slit die coating method, can be utilized. Particularly, when the metallic cylindrical rotating drum is used as a casting base, a roll coating method or offset gravure coating method using a coating rubber roll is preferably employed to prevent damage to the casting surface of the rotating drum. Alternatively, a noncontact type coating method, for example, fountain coating method or slit die-coating method is advantageously used for the rotating drum.

In the composite sheet material of the present invention, the amount of the electron beam-cured resin coating

layer is preferably 3 to 60 $g/m^2$, more preferably 5 to 40 $g/m^2$, after curing. When the coating amount is less than 3 $g/m^2$, the resultant cured resin coating layer surface may have an insufficient smoothness and thus an unsatisfactory appearance. Also, when the coating amount is more than 60 $g/m^2$, the coating effect may be saturated and the coating cost may be too high.

When a paper sheet is used as a support sheet, the amount of the cured resin coating layer after curing is preferably 3 $g/m^2$ or more, more preferably 5 to 20 $g/m^2$. When the coating amount is less than 3 $g/m^2$, the resultant coating layer may not able to fully compensate for an unevenness of the support paper sheet.

Further, when the paper sheet is used as a support sheet of the composite sheet material of the present invention, the electron beam-cured resin coating layer is preferably formed in a two or more layered structure. In this case, the election beam-cured resin layer formed from the electron beam-curable resin composition is preferably arranged adjacent to the support paper sheet.

In the composite sheet material of the present invention, an undercoat layer comprising, as a main component, a synthetic resin may be arranged between the support sheet and the electron beam-cured resin layer located next to the support sheet, to enhance the smoothness of the resultant composite sheet material and to improve the adhesion of the support sheet to the electron beam-cured resin layer located next to the support sheet.

The synthetic resin for the undercoat layer preferably comprises at least one member selected from, alkyd resins, (meth)acrylic resins, vinyl resins, cellulosic polymers, polyurethane resins, polyester resins and copolymers thereof. The synthetic resins are dissolved or dispersed in an organic solvent or an aqueous medium, and coated. The undercoat layer may be formed from an electron beam-curable resin or a ultraviolet ray-curable resin.

Further, when a paper sheet is employed as a support sheet, an undercoat layer comprising a barrier agent, for example, a polyvinyl alcohol, hydroxyethyl cellulose or oxidized starch may be arranged on the support paper sheet, to prevent penetration of the electron beam-curable resin composition into the support paper sheet.

The arrangement of the undercoat layer between the support sheet and the electron beam-cured resin coating layer located adjacent to the support sheet is usually used for the production of the composite sheet material in which a cured resin coating layer formed from an electron beam-curable resin composition is coated on a support sheet. For example, the undercoat layer is contained in the conventional support sheets for photographic printing sheets, photographic image-transfer sheet, support sheets of thermosensitive printing sheets, releasing sheets for working procedures, thermosensitive image-receiving sheets, ink jet recording sheets and sealing sheets.

For the purpose of increasing a whiteness or brightness of the composite sheet material of the present invention, a white inorganic or organic pigment is optionally contained in the electron beam-curable resin composition. There is no limitation to the type of the pigment. Preferably, the pigment contains at least one member selected from inorganic pigments, for example clay, kaolin, talc, magnesium hydroxide, aluminum hydroxide, calcium carbonate, anatase and rutile titanium dioxides, zinc oxide (chinese white) and barium sulfate; and organic pigments, which may be referred to as plastic pigments, for example, polystyrene. The pigment particles may be free from surface treatment. To enhance the dispersibility of the pigment particles in the electron beam-curable resin composition, the surfaces of the pigment particles are preferably treated with a siloxane, alumina, alcohol, silane-coupling agent, rhodinic acid and fatty acid. Also, the pigments may be employed alone or in a mixture of two or more thereof. The pigment is added in an amount which does not cause the resultant electron beam-cured product of the electron beam-curable resin composition of the present invention to exhibit an unsatisfactory softness. Usually, the pigment is preferably employed in an amount of 10 to 50 parts by weight, more preferably 20 to 40 parts by weight per 100 parts of the total weight of the electron beam-curable resin composition. When the content of the pigment is less than 10 parts by weight, the added pigment may exhibit an unsatisfactory opacifying effect. Also, when the pigment content is more than 50 parts, the resultant electron beam-curable resin composition may exhibit too a high viscosity and a flowability and thus may be difficult to be coated on a support sheet.

To disperse the inorganic or organic pigment in the electron beam-curable resin composition of the present invention, a conventional dispersing machine, for example, a three roll mill, two roll mill, Caules dissolver, homomixer, sand grinder, planetary mixer or ultrasonic disperser can be utilized.

The electron beam-curable resin composition of the present invention optionally contains an additive comprising at least one member selected from conventional dispersing agents, releasing agents, antifoamers, coloring materials, dyes and antiseptic agents.

The apparatus for irradiating an electron beam is not limited to a specific type of apparatuses. For example, a handigraph type scanning system, double scanning system, broadbeam system or curtain beam system electron beam-irradiating apparatus, can be used. Among those apparatuses, the curtain beam system electron beam-irradiation apparatus is advantageously employed for the present invention, because this system of apparatus can irradiate an electron beam with a large output and with a releasing low cost. When the electron beam is irradiated, preferably, the acceleration voltage is 100 to 300 kV, and the absorption dose is 0.1 to 8 Mrad, more preferably 0.5 to 6 Mrad.

EXAMPLES

The present invention will be further illustrated by the following examples which are merely representative and do not restrict the scope of the present invention in any way.

In the indication of the composition of the electron beam-curable resin composition in each example, the glass transition temperature of a homopolymer produced by a radical polymerization of a mono-functional, electron beam-curable organic compound is shown in parentheses located next to the name of the compound. The glass transition temperature was actually measured by a glass transition temperature tester (model: DSC 22C, made by SEIKO DENSHI K.K.)

Example 1

A composite sheet material having an excellent softness was produced and tested by the following procedures.

| Electron beam-curable resin composition 1 | |
|---|---|
| Component | Amount (part by weight) |
| Diacrylate of polyethyleneglycol having a molecular weight 600 (trademark: KAYARAD PEG600-DA made by NIHON KAYAKU K.K.) | 25 |
| Acryloylmorpholine (Tg = 140°C) (trademark: ACMO, made by K.K. KOJIN) | 75 |

A mixture of the above-mentioned components was mixed and dispersed in a Caules dissolver at 2000 rpm for 20 minutes to provide an electron beam-curable resin composition 1.

Production of composite sheet material

The resin composition 1 was coated on a surface of a support sheet consisting of a castcoated paper sheet having a basis weight of 145 $g/m^2$ (trademark: OK TOPCOAT DUL, made by OJI PAPER CO., LTD) by using a Mayer bar, to form a coating liquid layer in an amount corresponding to a cured weight of 10 $g/m^2$. Then, on the coating liquid layer, a casting material consisting of a polyester film having a thickness of 75 μm was superposed. An electron beam was irradiated toward the coating liquid layer through the polyester film superposed on the coating liquid layer under an acceleration voltage of 175 kV at an absorption dose of 3 Mrad in a nitrogen gas atmosphere containing 500 ppm or less of oxygen, to cause the coating liquid layer to be cured and the resultant electron beam-cured resin coating layer to be firmly bonded to the support sheet. The polyester film was removed from the cured resin coating layer to provide a composite sheet material having an electron beam-cured resin coating layer bonded to the support sheet.

Tests and evaluations

(1) Measurement of softness of composite sheet material

A specimen of the composite sheet material was bent at a bending angle of 180 degree in such a manner that the electron beam-cured resin coating layer forms an outer surface of the bent composite sheet material. The degree of crack-creation in the cured resin coating layer was observed by the naked eye and indicated in accordance with the following evaluation results.

| Class | Degree of crack-creation |
|---|---|
| 4 | No crack was formed in the bent resin layer |
| 3 | No crack was formed in the bent resin layer, but wrinkles were found after released from bending |
| 2 | A small number of cracks were formed in the bent resin layer |
| 1 | The bent resin layer was completely broken. |

In classes 4 and 3, the resultant composite sheet material is excellent for practical use, in class 2, the resultant composite sheet material can be practically used only in a limited use, and in class 1, the resultant composite sheet is useless in practice. The test result is shown in Table 1.

(2) Measurement of white sheet gloss

A white sheet gloss of a sample of the composite sheet material was measured in accordance with Japanese Industrial Standard (JIS) Z 8741, by using a gloss meter (model: VGS-ID, made by NIHON DENSHOKU KOGYO K. K., ar a test angle 60°/60°. When the measured gloss value is 75 or more, the resultant composite sheet material is excellent in gloss. The test result is shown in Table 1.

(3) Measurement of ultimate elongation of electron beam-cured resin film

An electron beam-cured resin film corresponding the electron beam-cured resin coating layer in the resultant composite sheet material was prepared by coating the resin composition 1 on a surface of a polyester film (film 1) by using a Mayer bar to form a coating liquid layer in an amount corresponding to a cured resin amount of 10 $g/m^2$. Then, another polyester film (film 2) which is the same as that used as a casting film in Example 1, was superposed on the coating liquid layer. An electron beam was irradiated toward the coating liquid layer through the film 2 under an acceleration voltage of 175 kV at an absorption dose of 3 Mrad in a nitrogen gas atmosphere containing 500 ppm or less of oxygen, to convert the coating liquid layer to an electron beam-cured resin film. The films 1 and 2 were removed from the resultant electron beam-cured resin film.

The cured resin film was subjected to an ultimate elongation measurement in accordance with JIS P 8 113 by using a tensile tester (trademark: STROGRAPH M-2, made by TOKYO SEIKI K.K.). In this measurement, a testing length of a specimen (a distance between a pair of gripers for the specimen) was 10 mm, and the stretching rate was 5 mm/min. The specimen had a width of 10 mm and a length of 20 mm. The testing atmosphere was conditioned to a temperature of 20 ± 2°C and a relative humidity of 65 ± 5% RH. Where the cured resin film exhibited an ultimate elongation of 50% or more, the composite sheet material having an electron beam-cured resin coating layer corresponding to the tested electron beam-cured resin film, exhibits a satisfactory softness for practice. Where the ultimate elongation of the tested cured resin film is 100% or more, the corresponding composite sheet material exhibits an excellent softness for practice and a high durability even under severe using conditions.

The test result is shown in Table 1.

Example 2

A composite sheet material was produced by the same procedures as in Example 1, with the following exceptions.

The electron beam-curable resin composition 1 was replaced by an electron beam-curable resin composition 2 having the following composition.

| Electron beam-curable resin composition 2 | |
|---|---|
| Component | Part by weight |
| Diacrylate of polyethyleneglycol (molecular weight: 270) (trademark: KAYARAD PEG300-DA, NIHON KAYAKU K.K.) | 25 |
| Acryloylmorpholine (Tg = 140°C) (trademark: ACMO, made by K.K. KOJIN) | 75 |

The resultant composite sheet material and the electron beam-cured resin film corresponding to the electron beam-cured resin coating layer of the composite sheet material were tested and evaluated by the same procedures as in Example 1. The test results are shown in Table 1.

Example 3

A composite sheet material was produced and tested by the same procedures as in Example 1, with the following exceptions.

The electron beam-curable resin composition 1 was replaced by an electron beam-curable resin composition 3 having the following composition.

| Electron beam-curable resin composition 3 | |
|---|---|
| Component | Part by weight |
| Polyurethane diacrylate of polypropyleneglycol having a molecular weight of 2,800 (trademark: CJ-8-1, made by NIHON KASEI K.K.) | 50 |

(continued)

| Electron beam-curable resin composition 3 | |
|---|---|
| Component | Part by weight |
| Acryloylmorpholine (Tg = 140°C) (trademark: ACMO, made by K.K. KOJIN) | 50 |

The test results are shown in Table 1.

Example 4

A composite sheet material was produced and tested by the same procedures as in Example 1, with the following exceptions.

The electron beam-curable resin composition I was replaced by an electron beam-curable resin composition 3 having the following composition.

| Electron beam-curable resin composition 4 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 50 |
| Acryloylmorpholine (Tg = 140°C) (trademark: ACMO, made by K.K. KOJIN) | 50 |

The test results are shown in Table 1.

Example 5

A composite sheet material was produced and tested by the same procedures as in Example 1, with the following exceptions.

The electron beam-curable resin composition 1 was replaced by an electron beam-curable resin composition 5 having the following composition.

| Electron beam-curable resin composition 5 | |
|---|---|
| Component | Part by weight |
| Polyurethane diacrylate of polypropyleneglycol having a molecular weight of 2,100 (trademark: PPG2,000-U, made by ARAKAWA KAGAKUKOGYO K.K.) | 50 |
| Acryloylmorpholine (Tg = 140°C) (trademark: ACMO, made by K.K. KOJIN) | 50 |

The test results are shown in Table 1.

Example 6

A composite sheet material was produced and tested by the same procedures as in Example 1, with the following exceptions.

The electron beam-curable resin composition 1 was replaced by an electron beam-curable resin composition 6 having the following composition.

| Electron beam-curable resin composition 6 | |
|---|---|
| Component | Part by weight |
| Polyurethane diacrylate of polypropyleneglycol having a molecular weight of 4,200 (trademark: J-11-3, made by NIHON KASEI K.K.) | 50 |
| Acryloylmorpholine (Tg = 140°C) (trademark: ACMO, made by K.K. KOJIN) | 50 |

The test results are shown in Table 1.

Example 7

A composite sheet material was produced and tested by the same procedures as in Example 1, with the following exceptions.

The electron beam-curable resin composition 1 was replaced by an electron beam-curable resin composition 7 having the following composition.

| Electron beam-curable resin composition 7 | |
|---|---|
| Component | Part by weight |
| Polyurethane diacrylate of polypropyleneglycol having a molecular weight of 700 (trademark: PPG700-MD), made by ARAKAWA KAGAKUKOGYO K.K.) | 50 |
| Acryloylmorpholine (Tg = 140°C) (trademark: ACMO, made by K.K. KOJIN) | 50 |

The test results are shown in Table 1.

Example 8

A composite sheet material was produced and tested by the same procedures as in Example 1, with the following exceptions.

The electron beam-curable resin composition 1 was replaced by an electron beam-curable resin composition 8 having the following composition.

| Electron beam-curable resin composition 8 | |
|---|---|
| Component | Part by weight |
| Polyurethane diacrylate of polytetramethyleneglycol having a molecular weight of 650 (trademark: PTMG 650-U, made by ARAKAWA KAGAKUKOGYO K.K.) | 50 |
| Acryloylmorpholine (Tg = 140°C) (trademark: ACMO, made by K.K. KOJIN) | 50 |

The test results are shown in Table 1.

Example 9

A composite sheet material was produced and tested by the same procedures as in Example 1, with the following exceptions.

The electron beam-curable resin composition 1 was replaced by an electron beam-curable resin composition 9 having the following composition.

| Electron beam-curable resin composition 9 | |
|---|---|
| Component | Part by weight |
| Polyurethane diacrylate of polyethyleneglycol having a molecular weight of 1,000 (trademark: K-7553, made by NIHON KASEI K.K.) | 50 |
| Acryloylmorpholine (Tg = 140°C) (trademark: ACMO, made by K.K. KOJIN) | 50 |

The test results are shown in Table 1.

Example 10

A composite sheet material was produced and tested by the same procedures as in Example 1, with the following exceptions.

The electron beam-curable resin composition I was replaced by an electron beam-curable resin composition 10 having the following composition.

| Electron beam-curable resin composition 10 | |
|---|---|
| Component | Part by weight |
| Polyurethane diacrylate of polypropyleneglycol having a molecular weight of 2,100 (trademark: PPG 2000-U, made by ARAKAWA KAGAKUKOGYO K.K.) | 75 |
| Acryloylmorpholine (Tg = 140°C) (trademark: ACMO, made by K.K. KOJIN) | 25 |

The test results are shown in Table 1.

Example 11

A composite sheet material was produced and tested by the same procedures as in Example 1, with the following exceptions.

The electron beam-curable resin composition 1 was replaced by an electron beam-curable resin composition 11 having the following composition.

| Electron beam-curable resin composition 11 | |
|---|---|
| Component | Part by weight |
| Polyurethane diacrylate of polyester produced from propyleneglycol and adipic acid and having a molecular weight of 1,000 (trademark: PGAA 1000, made by ARAKAWA KAGAKUKOGYO K.K.) | 50 |
| Acryloylmorpholine (Tg = 140°C) (trademark: ACMO, made by K.K. KOJIN) | 50 |

The test results are shown in Table 1.

Example 12

A composite sheet material was produced and tested by the same procedures as in Example 1, with the following exceptions.

The electron beam-curable resin composition 1 was replaced by an electron beam-curable resin composition 12 having the following composition.

| Electron beam-curable resin composition 12 | |
|---|---|
| Component | Part by weight |
| Polyurethane diacrylate of polyester produced from propyleneglycol and adipic acid and having a molecular weight of 2,000 (trademark: PGAA 2000, made by ARAKAWA KAGAKUKOGYO K.K.) | 60 |
| Acryloylmorpholine (Tg = 140°C) (trademark: ACMO, made by K.K. KOJIN) | 40 |

The test results are shown in Table 1.

Example 13

A composite sheet material was produced and tested by the same procedures as in Example 1, with the following exceptions.

The electron beam-curable resin composition 1 was replaced by an electron beam-curable resin composition 13 having the following composition.

| Electron beam-curable resin composition 13 | |
|---|---|
| Component | Part by weight |
| Polyurethane diacrylate of polyester produced from ethyleneglycol and adipic acid and having a molecular weight of 2,000 (trademark: EGAA 2000, made by ARAKAWA KAGAKUKOGYO K.K.) | 60 |
| Acryloylmorpholine (Tg = 140°C) (trademark: ACMO, made by K.K. KOJIN) | 40 |

The test results are shown in Table 1.

Example 14

A composite sheet material was produced and tested by the same procedures as in Example 1, with the following exceptions.

The electron beam-curable resin composition 1 was replaced by an electron beam-curable resin composition 14 having the following composition.

| Electron beam-curable resin composition 14 | |
|---|---|
| Component | Part by weight |
| Polyurethane diacrylate of polyester produced from tetramethyleneglycol and adipic acid and having a molecular weight of 2,000 (trademark: BGAA 2000, made by ARAKAWA KAGAKUKOGYO K.K.) | 60 |
| Acryloylmorpholine (Tg = 140°C) (trademark: ACMO, made by K.K. KOJIN) | 40 |

The test results are shown in Table 1.

Example 15

A composite sheet material was produced and tested by the same procedures as in Example 1, with the following exceptions.

The electron beam-curable resin composition 1 was replaced by an electron beam-curable resin composition 15 having the following composition.

| Electron beam-curable resin composition 15 | |
|---|---|
| Component | Part by weight |
| Polyurethane diacrylate of polyester produced from methylpentanediol and adipic acid and having a molecular weight of 1,000 (trademark: MPAA 1000, made by ARAKAWA KAGAKUKOGYO K.K.) | 60 |
| Acryloylmorpholine (Tg = 140°C) (trademark: ACMO, made by K.K. KOJIN) | 40 |

The test results are shown in Table 1.

Example 16

A composite sheet material was produced and tested by the same procedures as in Example 1, with the following exceptions.

The electron beam-curable resin composition 1 was replaced by an electron beam-curable resin composition 16 having the following composition.

| Electron beam-curable resin composition 16 | |
|---|---|
| Component | Part by weight |
| Polyurethane diacrylate of polyester produced from hexanediol and adipic acid and having a molecular weight of 1,000 (trademark: HGAA 1000, made by ARAKAWA KAGAKUKOGYO K.K.) | 60 |
| Acryloylmorpholine (Tg = 140°C) (trademark: ACMO, made by K.K. KOJIN) | 40 |

The test results are shown in Table 1.

Example 17

A composite sheet material was produced and tested by the same procedures as in Example 1, with the following exceptions.

The electron beam-curable resin composition 1 was replaced by an electron beam-curable resin composition 17 having the following composition.

| Electron beam-curable resin composition 17 | |
|---|---|
| Component | Part by weight |
| Polyurethane diacrylate of polyester prepared from neopentylglycol and adipic acid and having a molecular weight of 1,000 (trademark: NPAA 1000, made by ARAKAWA KAGAKUKOGYO K.K.) | 60 |
| Acryloylmorpholine (Tg = 140°C) (trademark: ACMO, made by K.K. KOJIN) | 40 |

The test results are shown in Table 1.

Example 18

A composite sheet material was produced and tested by the same procedures as in Example 1, with the following exceptions.

The electron beam-curable resin composition I was replaced by an electron beam-curable resin composition 18 having the following composition.

| Electron beam-curable resin composition 18 | |
|---|---|
| Component | Part by weight |
| Polyurethane diacrylate of polyester produced from neopentylglycol and adipic acid and having a molecular weight of 1,000 (trademark: NPAA 1000, made by ARAKAWA KAGAKUKOGYO K.K.) | 75 |
| Acryloylmorpholine (Tg = 140°C) (trademark: ACMO, made by K.K. KOJIN) | 25 |

The test results are shown in Table 1.

Example 19

A composite sheet material was produced and tested by the same procedures as in Example 1, with the following exceptions.

The electron beam-curable resin composition 1 was replaced by an electron beam-curable resin composition 19 having the following composition.

| Electron beam-curable resin composition 19 | |
|---|---|
| Component | Part by weight |
| Polyurethane diacrylate of polyester produced from neopentylglycol and adipic acid and having a molecular weight of 1,000 (trademark: NPAA 1000, made by ARAKAWA KAGAKUKOGYO K.K.) | 25 |
| Acryloylmorpholine (Tg = 140°C) (trademark: ACMO, made by K.K. KOJIN) | 75 |

The test results are shown in Table 1.

Example 20

A composite sheet material was produced and tested by the same procedures as in Example 1, with the following exceptions.

The electron beam-curable resin composition 1 was replaced by an electron beam-curable resin composition 20 having the following composition.

| Electron beam-curable resin composition 20 | |
|---|---|
| Component | Part by weight |
| Polyepoxy diacrylate of dimeric acid having a molecular weight of about 1,000 (trademark: DA1B, made by ARAKAWA KAGAKUKOGYO K.K.) | 50 |
| Acryloylmorpholine (Tg = 140°C) (trademark: ACMO, made by K.K. KOJIN) | 50 |

The test results are shown in Table 1.

Example 21

A composite sheet material was produced and tested by the same procedures as in Example 1, with the following exceptions.

The electron beam-curable resin composition I was replaced by an electron beam-curable resin composition 21 having the following composition.

| Electron beam-curable resin composition 21 | |
|---|---|
| Component | Part by weight |
| Polyepoxy diacrylate of dimeric acid having a molecular weight of about 2,000 (trademark: DA7B, made by ARAKAWA KAGAKUKOGYO K.K.) | 50 |
| Acryloylmorpholine (Tg = 140°C) (trademark: ACMO, made by K.K. KOJIN) | 50 |

The test results are shown in Table 1.

Example 22

A composite sheet material was produced and tested by the same procedures as in Example 1, with the following exceptions.

The electron beam-curable resin composition 1 was replaced by an electron beam-curable resin composition 22 having the following composition.

| Electron beam-curable resin composition 22 | |
|---|---|
| Component | Part by weight |
| Polyurethane diacrylate of dimeric acid having a molecular weight of about 2,000 (trademark: DA 10HB, made by ARAKAWA KAGAKUKOGYO K.K.) | 50 |
| Acryloylmorpholine (Tg = 140°C) (trademark: ACMO, made by K.K. KOJIN) | 50 |

The test results are shown in Table 1.

Example 23

A composite sheet material was produced and tested by the same procedures as in Example 1, with the following exceptions.

The electron beam-curable resin composition 1 was replaced by an electron beam-curable resin composition 23 having the following composition.

| Electron beam-curable resin composition 23 | |
|---|---|
| Component | Part by weight |
| Polyurethane diacrylate of polytetramethyleneglycol having a molecular weight of 650 (trademark: PTMG 650-U, made by ARAKAWA KAGAKUKOGYO K.K.) | 50 |
| Dicyclopentanyl acrylate (Tg = 91°C) (trademark: FA-513A, made by HITACHI KASEI K.K.) | 50 |

The test results are shown in Table 1.

Example 24

A composite sheet material was produced and tested by the same procedures as in Example 1, with the following exceptions.

The electron beam-curable resin composition 1 was replaced by an electron beam-curable resin composition 24 having the following composition.

| Electron beam-curable resin composition 24 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 50 |
| Dicyclopentanyl acrylate (Tg = 91°C) (trademark: FA-513A, made by HITACHI KASEI K.K.) | 50 |

The test results are shown in Table 1.

Example 25

A composite sheet material was produced and tested by the same procedures as in Example 1, with the following exceptions.

The electron beam-curable resin composition 1 was replaced by an electron beam-curable resin composition 25 having the following composition.

| Electron beam-curable resin composition 25 | |
|---|---|
| Component | Part by weight |
| Polyurethane diacrylate of hydrogenated polybutadienediol having a molecular weight of 1,000 (trademark: TEAI-1000, made by NIHON SODA K.K.) | 50 |
| Dicyclopentanyl acrylate (Tg = 91°C) (trademark: FA-513A, made by HITACHI KASEI K.K.) | 50 |

The test results are shown in Table 1.

Example 26

A composite sheet material was produced and tested by the same procedures as in Example 1, with the following exceptions.

The electron beam-curable resin composition 1 was replaced by an electron beam-curable resin composition 26 having the following composition.

| Electron beam-curable resin composition 26 | |
|---|---|
| Component | Part by weight |
| Polyurethane diacrylate of polyolefindiol having a molecular weight of 2,000 (trademark: KU 511-1B, made by ARAKAWA KAGAKUKOGYO K.K.) | 50 |
| Dicyclopentanyl acrylate (Tg = 91°C) (trademark: FA513-A, made by HITACHI KASEI K.K.) | 50 |

The test results are shown in Table 1.

Example 27

A composite sheet material was produced and tested by the same procedures as in Example 1, with the following exceptions.

The electron beam-curable resin composition 1 was replaced by an electron beam-curable resin composition 27 having the following composition.

| Electron beam-curable resin composition 27 | |
|---|---|
| Component | Part by weight |
| Polyurethane diacrylate of polyesterpolyol produced from neopentylglycol and adipic acid and having a molecular weight of 1,000 (trademark: NPAA 1000, made by ARAKAWA KAGAKUKOGYO K.K.) | 50 |
| Dicyclopentanyl acrylate (Tg = 91°C) (trademark: FA513-A, made by HITACHI KASEI K.K.) | 50 |

The test results are shown in Table 1.

Example 28

A composite sheet material was produced and tested by the same procedures as in Example 1, with the following exceptions.

The electron beam-curable resin composition 1 was replaced by an electron beam-curable resin composition 28 having the following composition.

| Electron beam-curable resin composition 28 | |
|---|---|
| Component | Part by weight |
| Polyurethane diacrylate of polyesterpolyol produced from propyleneglycol and adipic acid and having a molecular weight of 1,000 (trademark: PGAA 1000, made by ARAKAWA KAGAKUKOGYO K.K.) | 50 |
| Dicyclopentanyl acrylate (Tg = 91°C) (trademark: FA513-A, made by HITACHI KASEI K.K.) | 50 |

The test results are shown in Table 1.

Example 29

A composite sheet material was produced and tested by the same procedures as in Example 1, with the following exceptions.

The electron beam-curable resin composition 1 was replaced by an electron beam-curable resin composition 29 having the following composition.

| Electron beam-curable resin composition 29 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 50 |
| Cyclohexyl acrylate (Tg = 40°C) (trademark: BISCOAT #155, made by OSAKA YUKI K.K.) | 50 |

The test results are shown in Table 1.

Example 30

A composite sheet material was produced and tested by the same procedures as in Example 1, with the following exceptions.

The electron beam-curable resin composition 1 was replaced by an electron beam-curable resin composition 30 having the following composition.

| Electron beam-curable resin composition 30 | |
|---|---|
| Component | Part by weight |
| Polyurethane diacrylate of polyesterpolyol produced from neopentylglycol and adipic acid and having a molecular weight of 1,000 (trademark: NPAA 1000, made by ARAKAWA KAGAKUKOGYO K.K.) | 50 |
| Cyclohexyl acrylate (Tg = 40°C) (trademark: BISCOAT #155, made by OSAKA YUKI K.K.) | 50 |

The test results are shown in Table 1.

Example 31

A composite sheet material was produced and tested by the same procedures as in Example 1, with the following exceptions.

The electron beam-curable resin composition 1 was replaced by an electron beam-curable resin composition 31

having the following composition.

| Electron beam-curable resin composition 31 | |
|---|---|
| Component | Part by weight |
| Polyurethane diacrylate of hydrogenated polybutadienediol having a molecular weight of 1,000 (trademark: TEAI-1000, made by NIHON SODA K.K.) | 50 |
| Cyclohexyl acrylate (Tg = 40°C) (trademark: BISCOAT #155, made by OSAKA YUKI K.K.) | 50 |

The test results are shown in Table 1.

Example 32

A composite sheet material was produced and tested by the same procedures as in Example 1, with the following exceptions.

The electron beam-curable resin composition 1 was replaced by an electron beam-curable resin composition 32 having the following composition.

| Electron beam-curable resin composition 32 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 50 |
| test-butyl acrylate (Tg = 41°C) (trademark: TBA, made by OSAKA YUKI K.K.) | 50 |

The test results are shown in Table 1.

Example 33

A composite sheet material was produced and tested by the same procedures as in Example 1, with the following exceptions.

The electron beam-curable resin composition 1 was replaced by an electron beam-curable resin composition 33 having the following composition.

| Electron beam-curable resin composition 33 | |
|---|---|
| Component | Part by weight |
| Polyurethane diacrylate of polyesterpolyol produced from neopentylglycol and adipic acid and having a molecular weight of 1,000 (trademark: NPAA 1000, made by ARAKAWA KAGAKUKOGYO K.K.) | 50 |
| test-butyl acrylate (Tg = 41°C) (trademark: TBA, made by OSAKA YUKI K.K.) | 50 |

The test results are shown in Table 1.

Example 34

A composite sheet material was produced and tested by the same procedures as in Example 1, with the following exceptions.

The electron beam-curable resin composition 1 was replaced by an electron beam-curable resin composition 34 having the following composition.

| Electron beam-curable resin composition 34 | |
|---|---|
| Component | Part by weight |
| Polyurethane diacrylate of hydrogenated polybutadienediol having a molecular weight of 1,000 (trademark: TEAI-1000, made by NIHON SODA K.K.) | 50 |

(continued)

| Electron beam-curable resin composition 34 | |
|---|---|
| Component | Part by weight |
| test-butyl acrylate (Tg = 41°C) (trademark: TBA, made by OSAKA YUKI K.K.) | 50 |

The test results are shown in Table 1.

Example 35

A composite sheet material was produced and tested by the same procedures as in Example 1, with the following exceptions.

The electron beam-curable resin composition 1 was replaced by an electron beam-curable resin composition 35 having the following composition.

| Electron beam-curable resin composition 35 | |
|---|---|
| Component | Part by weight |
| Polyurethane diacrylate of polypropyleneglycol having a molecular weight of 700 (trademark: PPG 700-U, made by ARAKAWA KAGAKUKOGYO K.K.) | 50 |
| N-acryloyloxyethyl hexahydrophthalimide (Tg = 39°C) (trademark: Aronix TO-1429, made by TOA GOSEI K.K.) | 50 |

The test results are shown in Table 1.

Example 36

A composite sheet material was produced and tested by the same procedures as in Example 1, with the following exceptions.

The electron beam-curable resin composition 1 was replaced by an electron beam-curable resin composition 36 having the following composition.

| Electron beam-curable resin composition 36 | |
|---|---|
| Component | Part by weight |
| Polyurethane diacrylate of polyesterpolyol produced from neopentylglycol and adipic acid and having a molecular weight of 1,000 (trademark: NPAA 1000, made by ARAKAWA KAGAKUKOGYO K.K.) | 50 |
| N-acryloyloxyethyl hexahydrophthalimide (Tg = 39°C) (trademark: Aronix TO-1429, made by TOA GOSEI K.K.) | 50 |

The test results are shown in Table 1.

Example 37

A composite sheet material was produced and tested by the same procedures as in Example 1, with the following exceptions.

The electron beam-curable resin composition 1 was replaced by an electron beam-curable resin composition 37 having the following composition.

| Electron beam-curable resin composition 37 | |
|---|---|
| Component | Part by weight |
| Polyepoxy diacrylate of dimer acid having a molecular weight of about 2,000 (trademark: DA7B, made by ARAKAWA KAGAKUKOGYO K.K.) | 50 |

(continued)

| Electron beam-curable resin composition 37 | |
|---|---|
| Component | Part by weight |
| N-acryloyloxyethylhexahydrophthalimide (Tg = 39°C) (trademark: Aronix TO-1429, made by TOA GOSEI K.K.) | 50 |

The test results are shown in Table 1.

Table 1

| Example No. \ Item | | Gloss | Softness | |
|---|---|---|---|---|
| | | | Crack-resistance upon bending | Ultimate elongation (%) |
| Example | 1 | 92 | 3 | 95 |
| | 2 | 97 | 3 | 60 |
| | 3 | 90 | 4 | 135 |
| | 4 | 92 | 4 | 150 |
| | 5 | 90 | 4 | 220 |
| | 6 | 85 | 4 | 230 |
| | 7 | 89 | 4 | 105 |
| | 8 | 92 | 4 | 150 |
| | 9 | 95 | 4 | 220 |
| | 10 | 90 | 4 | 220 |
| | 11 | 93 | 4 | 120 |
| | 12 | 92 | 4 | 145 |
| | 13 | 91 | 4 | 145 |
| | 14 | 91 | 4 | 160 |
| | 15 | 93 | 4 | 175 |
| | 16 | 92 | 4 | 200 |
| | 17 | 91 | 4 | 190 |
| | 18 | 90 | 4 | 155 |
| | 19 | 95 | 4 | 180 |
| | 20 | 90 | 4 | 105 |
| | 21 | 88 | 4 | 155 |
| | 22 | 85 | 4 | 165 |
| | 23 | 86 | 4 | 150 |
| | 24 | 86 | 4 | 175 |
| | 25 | 82 | 4 | 150 |
| | 26 | 86 | 4 | 130 |
| | 27 | 84 | 4 | 155 |
| | 28 | 80 | 4 | 125 |
| | 29 | 84 | 4 | 120 |
| | 30 | 84 | 4 | 140 |
| | 31 | 82 | 4 | 120 |
| | 32 | 82 | 4 | 120 |
| | 33 | 84 | 4 | 130 |
| | 34 | 80 | 4 | 110 |
| | 35 | 88 | 4 | 150 |
| | 36 | 88 | 4 | 175 |
| | 37 | 84 | 4 | 140 |

Example 38

A composite sheet material was produced and tested by the same procedures as in Example 1, with the following exceptions.

The electron beam-curable resin composition I was replaced by an electron beam-curable resin composition 38 having the following composition.

| Electron beam-curable resin composition 38 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 50 |
| p-Cumylphenol EO-modified acrylate (Tg = 35°C) (trademark: Aronix TO-1210, made by TOA GOSEI K.K.) | 50 |

The test results are shown in Table 2.

Example 39

A composite sheet material was produced and tested by the same procedures as in Example 1, with the following exceptions.

The electron beam-curable resin composition 1 was replaced by an electron beam-curable resin composition 39 having the following composition.

| Electron beam-curable resin composition 39 | |
|---|---|
| Component | Part by weight |
| Polyurethane diacrylate of polyesterpolyol produced from neopentylglycol and adipic acid and having a molecular weight of 1,000 (trademark: NPAA 1000, made by ARAKAWA KAGAKUKOGYO K.K.) | 50 |
| p-Cumylphenol EO-modified acrylate (-Tg = 35°C) (trademark: Aronix TO-1210, made by TOA GOSEI K.K.) | 50 |

The test results are shown in Table 2.

Example 40

A composite sheet material was produced and tested by the same procedures as in Example 1, with the following exceptions.

The electron beam-curable resin composition 1 was replaced by an electron beam-curable resin composition 40 having the following composition.

| Electron beam-curable resin composition 40 | |
|---|---|
| Component | Part by weight |
| Polyurethane diacrylate of hydrogenated polybutadienediol having a molecular weight of 1,000 (trademark: TEAI-1000, made by NIHON SODA K.K.) | 50 |
| p-Cumylphenol EO-modified acrylate (Tg = 35°C) (trademark: Aronix TO-1210, made by TOA GOSEI K.K.) | 50 |

The test results are shown in Table 2.

Example 41

A composite sheet material was produced and tested by the same procedures as in Example 1, with the following exceptions.

The electron beam-curable resin composition 1 was replaced by an electron beam-curable resin composition 41

having the following composition.

| Electron beam-curable resin composition 41 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 50 |
| 2-acryloyloxypropyl hydrogen phthalate (Tg = 158°C) (trademark: BISCOAT #2100, made by OSAKA YUKI K.K.) | 50 |

The test results are shown in Table 2.

Example 42

A composite sheet material was produced and tested by the same procedures as in Example 1, with the following exceptions.

The electron beam-curable resin composition 1 was replaced by an electron beam-curable resin composition 42 having the following composition.

| Electron beam-curable resin composition 42 | |
|---|---|
| Component | Part by weight |
| Polyurethane diacrylate of polyesterpolyol produced from neopentylglycol and adipic acid and having a molecular weight of 1,000 (trademark: NPAA 1000, made by ARAKAWA KAGAKUKOGYO K.K.) | 50 |
| 2-acryloyloxypropyl hydrogen phthalate (Tg = 158°C) (trademark: BISCOAT #2100, made by OSAKA YUKI K.K.) | 50 |

The test results are shown in Table 2.

Example 43

A composite sheet material was produced and tested by the same procedures as in Example 1, with the following exceptions.

The electron beam-curable resin composition 1 was replaced by an electron beam-curable resin composition 43 having the following composition.

| Electron beam-curable resin composition 43 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 50 |
| N-vinyl-2-pyrrolidone (Tg = 135°C) (trademark: V-Pyrol, made by ISP) | 50 |

The test results are shown in Table 2.

Example 44

A composite sheet material was produced and tested by the same procedures as in Example 1, with the following exceptions.

The electron beam-curable resin composition 1 was replaced by an electron beam-curable resin composition 44 having the following composition.

| Electron beam-curable resin composition 44 | |
|---|---|
| Component | Part by weight |
| Polyurethane diacrylate of polyesterpolyol produced from neopentylglycol and adipic acid and having a molecular weight of 1,000 (trademark: NPAA 1000, made by ARAKAWA KAGAKUKOGYO K.K.) | 50 |
| N-vinyl-2-pyrrolidone (Tg = 135°C) (trademark: V-Pyrol, made by ISP) | 50 |

The test results are shown in Table 2.

Example 45

A composite sheet material was produced and tested by the same procedures as in Example 1, with the following exceptions.

The electron beam-curable resin composition 1 was replaced by an electron beam-curable resin composition 45 having the following composition.

| Electron beam-curable resin composition 45 | |
|---|---|
| Component | Part by weight |
| Polyepoxy diacrylate of dimeric acid having a molecular weight of about 2,000 (trademark: DA7B, made by ARAKAWA KAGAKUKOGYO K.K.) | 50 |
| N-vinyl-2-pyrrolidone (Tg = 135°C) (trademark: V-Pyrol, made by ISP) | 50 |

The test results are shown in Table 2.

Example 46

A composite sheet material was produced and tested by the same procedures as in Example 1, with the following exceptions.

The electron beam-curable resin composition 1 was replaced by an electron beam-curable resin composition 46 having the following composition.

| Electron beam-curable resin composition 46 | |
|---|---|
| Component | Part by weight |
| Polyurethane diacrylate of polypropyleneglycol having a molecular weight of 700 (trademark: PPG 700-U, made by ARAKAWA KAGAKUKOGYO K.K.) | 50 |
| N-vinyl-ε-caprolactam (Tg = 85°C) (trademark: V-Cap, made by ISP) | 50 |

The test results are shown in Table 2.

Example 47

A composite sheet material was produced and tested by the same procedures as in Example 1, with the following exceptions.

The electron beam-curable resin composition 1 was replaced by an electron beam-curable resin composition 47 having the following composition.

| Electron beam-curable resin composition 47 | |
|---|---|
| Component | Part by weight |
| Polyurethane diacrylate of polyesterpolyol produced from neopentylglycol and adipic acid and having a molecular weight of 1,000 (trademark: NPAA 1000, made by ARAKAWA KAGAKUKOGYO K.K.) | 50 |

(continued)

| Electron beam-curable resin composition 47 | |
|---|---|
| Component | Part by weight |
| N-vinyl-ε-caprolactam (Tg = 85°C) (trademark: V-Cap, made by ISP) | 50 |

The test results are shown in Table 2.

Example 48

A composite sheet material was produced and tested by the same procedures as in Example 1, with the following exceptions.

The electron beam-curable resin composition 1 was replaced by an electron beam-curable resin composition 48 having the following composition.

| Electron beam-curable resin composition 48 | |
|---|---|
| Component | Part by weight |
| Polyepoxy diacrylate of dimeric acid having a molecular weight of about 2,000 (trademark: DA7B, made by ARAKAWA KAGAKUKOGYO K.K.) | 50 |
| N-vinyl-ε-caprolactam (Tg = 85°C) (trademark: V-Cap, made by ISP) | 50 |

The test results are shown in Table 2.

Example 49

A composite sheet material was produced and tested by the same procedures as in Example 1, with the following exceptions.

The electron beam-curable resin composition 1 was replaced by an electron beam-curable resin composition 49 having the following composition.

| Electron beam-curable resin composition 49 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 25 |
| Polyurethane diacrylate of polypropyleneglycol having a molecular weight of 4,200 (trademark: CJ-11-3, made by NIHON KASEI K.K.) | 25 |
| Acryloylmorpholine (Tg = 140°C) (trademark: ACMO, made by K.K. KOJIN) | 50 |

The test results are shown in Table 2.

Example 50

A composite sheet material was produced and tested by the same procedures as in Example 1, with the following exceptions.

The electron beam-curable resin composition I was replaced by an electron beam-curable resin composition 50 having the following composition.

| Electron beam-curable resin composition 50 | |
|---|---|
| Component | Part by weight |
| Polyurethane diacrylate of polytetramethyleneglycol having a molecular weight of 650 (trademark: PTMG 650-U, made by ARAKAWA KAGAKUKOGYO K.K.) | 20 |
| Polyurethane diacrylate of polypropyleneglycol having a molecular weight of 2,000 (trademark: PPG 2,000-U, made by ARAKAWA KAGAKUKOGYO K.K.) | 40 |

(continued)

| Electron beam-curable resin composition 50 | |
|---|---|
| Component | Part by weight |
| Acryloylmorpholine (Tg = 140°C) (trademark: ACMO, made by K.K. KOJIN) | 40 |

The test results are shown in Table 2.

Example 51

A composite sheet material was produced and tested by the same procedures as in Example 1, with the following exceptions.

The electron beam-curable resin composition 1 was replaced by an electron beam-curable resin composition 51 having the following composition.

| Electron beam-curable resin composition 51 | |
|---|---|
| Component | Part by weight |
| Polyurethane diacrylate of polyester produced from propyleneglycol and adipic acid and having a molecular weight of 1,000 (trademark: PGAA 1000, made by ARAKAWA KAGAKUKOGYO K.K.) | 30 |
| Polyurethane diacrylate of polyester prepared from neopentylglycol and adipic acid and having a molecular weight of 1,000 (trademark: NPAA-1000, made by ARAKAWA KAGAKUKOGYO K.K.) | 30 |
| Acryloylmorpholine (Tg = 140°C) (trademark: ACMO, made by K.K. KOJIN) | 40 |

The test results are shown in Table 2.

Example 52

A composite sheet material was produced and tested by the same procedures as in Example 1, with the following exceptions.

The electron beam-curable resin composition 1 was replaced by an electron beam-curable resin composition 52 having the following composition.

| Electron beam-curable resin composition 52 | |
|---|---|
| Component | Part by weight |
| Polyurethane diacrylate of polypropyleneglycol having a molecular weight of 700 (trademark: PPG 700-U, made by ARAKAWA KAGAKUKOGYO K.K.) | 25 |
| Polyurethane diacrylate of polyester prepared from neopentylglycol and adipic acid and having a molecular weight of 1,000 (trademark: NPAA 1000, made by ARAKAWA KAGAKUKOGYO K.K.) | 25 |
| p-Cumylphenol EO-modified acrylate (Tg = 35°C) (trademark: Aronix TO-1210, made by TOA GOSEI K.K.) The test results are shown in Table 2. | 50 |

Example 53

A composite sheet material was produced and tested by the same procedures as in Example 1, with the following exceptions.

The electron beam-curable resin composition 1 was replaced by an electron beam-curable resin composition 53 having the following composition.

| Electron beam-curable resin composition 53 | |
|---|---|
| Component | Part by weight |
| Polyurethane diacrylate of polyester prepared from neopentylglycol and adipic acid and having a molecular weight of 1,000 (trademark: NPAA 1000, made by ARAKAWA KAGAKUKOGYO K.K.) | 25 |

(continued)

| Electron beam-curable resin composition 53 | |
|---|---|
| Component | Part by weight |
| Polyurethane diacrylate of hydrogenated polybutadienediol having a molecular weight of 1,000 (trademark: TEAI-1000, made by NIHON SODA K.K.) | 25 |
| Dicyclopentanyl acrylate (Tg = 91°C) (trademark: FA513-A, made by HITACHI KASEI K.K.) | 50 |

The test results are shown in Table 2.

Example 54

A composite sheet material was produced and tested by the same procedures as in Example 1, with the following exceptions.

The electron beam-curable resin composition 1 was replaced by an electron beam-curable resin composition 54 having the following composition.

| Electron beam-curable resin composition 54 | |
|---|---|
| Component | Part by weight |
| Polyurethane diacrylate of polypropyleneglycol having a molecular weight of 1,000 (trademark: PPG 1000-U, made by ARAKAWA KAGAKUKOGYO K.K.) | 50 |
| Acryloylmorpholine (Tg = 140°C) (trademark: ACMO, made by K.K. KOJIN) | 25 |
| Dicyclopentanyl acrylate (Tg = 91°C) (trademark: FA-513A, made by HITACHI KASEI K.K.) | 25 |

The test results are shown in Table 2.

Example 55

A composite sheet material was produced and tested by the same procedures as in Example 1, with the following exceptions.

The electron beam-curable resin composition 1 was replaced by an electron beam-curable resin composition 55 having the following composition.

| Electron beam-curable resin composition 55 | |
|---|---|
| Component | Part by weight |
| Polyurethane diacrylate of polyester prepared from neopentylglycol and adipic acid and having a molecular weight of 1,000 (trademark: NPAA-1000, made by ARAKAWA KAGAKUKOGYO K.K.) | 60 |
| Acryloylmorpholine (Tg = 140°C) (trademark: ACMO, made by K.K. KOJIN) | 20 |
| N-acryloyloxyethyl hexahydrophthalimide (Tg = 39°C) (trademark: Aronix TO-1429, made by TOA GOSEI K.K.) | 20 |

The test results are shown in Table 2.

Example 56

A composite sheet material was produced and tested by the same procedures as in Example 1, with the following exceptions.

The electron beam-curable resin composition I was replaced by an electron beam-curable resin composition 56 having the following composition.

| Electron beam-curable resin composition 56 | |
|---|---|
| Component | Part by weight |
| Polyurethane diacrylate of hydrogenated polybutadienediol having a molecular weight of 1,000 (trademark: TEAI-1000, made by NIHON SODA K.K.) | 50 |
| Dicyclopentanyl acrylate (Tg = 91°C) (trademark: FA-513A, made by HITACHI KASEI K.K.) | 25 |
| Cyclohexyl acrylate (Tg = 40°C) (trademark: BISCOAT #155, made by OSAKA YUKI K.K.) | 25 |

The test results are shown in Table 2.

Example 57

A composite sheet material was produced and tested by the same procedures as in Example 1, with the following exceptions.

The electron beam-curable resin composition 1 was replaced by an electron beam-curable resin composition 57 having the following composition.

| Electron beam-curable resin composition 57 | |
|---|---|
| Component | Part by weight |
| Polyurethane diacrylate of polytetramethyleneglycol having a molecular weight of 650 (trademark: PTMG 650-U, made by ARAKAWA KAGAKUKOGYO K.K.) | 14 |
| Polyurethane diacrylate of polypropyleneglycol having a molecular weight of 2,000 (trademark: PPG 2000-U, made by ARAKAWA KAGAKUKOGYO K.K.) | 28 |
| Acryloylmorpholine (Tg = 140°C) (trademark: ACMO, made by K.K. KOJIN) | 28 |
| Calcium carbonate (trademark: TP-121MC, made by OKUTAMA KOGYO K.K.) | 30 |

The test results are shown in Table 2.

Comparative Example 1

A composite sheet material was produced and tested by the same procedures as in Example 1, with the following exceptions.

The electron beam-curable resin composition 1 was replaced by an electron beam-curable resin composition 58 having the following composition.

| Electron beam-curable resin composition 58 | |
|---|---|
| Component | Part by weight |
| Polyurethane diacrylate of polypropyleneglycol having a molecular weight of 2,100 (trademark: PPG 2000-U, made by ARAKAWA KAGAKUKOGYO K.K.) | 50 |
| Methoxytriethyleneglycol acrylate (Tg = -50°C) (trademark: New FRONTIER ME-3, made by DAIICHI KOGYO SEIYAKU K.K.) | 50 |

The test results are shown in Table 2.

Comparative Example 2

A composite sheet material was produced and tested by the same procedures as in Example 1, with the following exceptions.

The electron beam-curable resin composition I was replaced by an electron beam-curable resin composition 59 having the following composition.

| Electron beam-curable resin composition 59 | |
|---|---|
| Component | Part by weight |
| Polyurethane diacrylate of polyester prepared from propyleneglycol and adipic acid and having a molecular weight of 1,000 (trademark: PGAA-1000, made by ARAKAWA KAGAKUKOGYO K.K.) | 50 |
| Phenoxypolyethyleneglycol acrylate (Tg = -8°C) (trademark: LIGHT ACRYLATE P-200A, made by KYOEISHA KAGAKU K.K.) | 50 |

The test results are shown in Table 2.

Comparative Example 3

A composite sheet material was produced and tested by the same procedures as in Example 1, with the following exceptions.

The electron beam-curable resin composition 1 was replaced by an electron beam-curable resin composition 60 having the following composition.

| Electron beam-curable resin composition 60 | |
|---|---|
| Component | Part by weight |
| Polyurethane diacrylate of hydrogenated polybutadienediol having a molecular weight of 1,000 (trademark: TEAI-1000, made by NIHON SODA K.K.) | 50 |
| Lauryl acrylate (Tg = 15°C) (trademark: LA, made by OSAKA YUKI K.K.) | 50 |

The test results are shown in Table 2.

Comparative Example 4

A composite sheet material was produced and tested by the same procedures as in Example 1, with the following exceptions.

The electron beam-curable resin composition I was replaced by an electron beam-curable resin composition 61 having the following composition.

| Electron beam-curable resin composition 61 | |
|---|---|
| Component | Part by weight |
| Polyepoxy diacrylate of dimeric acid having a molecular weight of about 2,000 (trademark: DA7B, made by ARAKAWA KAGAKUKOGYO K.K.) | 50 |
| Nonylphenol EO-modified acrylate (Tg = 17°C) (trademark: Aronix M-III, made by TOA GOSEI K. K.) | 50 |

The test results are shown in Table 2.

Comparative Example 5

A composite sheet material was produced and tested by the same procedures as in Example 1, with the following exceptions.

The electron beam-curable resin composition I was replaced by an electron beam-curable resin composition 62 having the following composition.

| Electron beam-curable resin composition 62 | |
|---|---|
| Component | Part by weight |
| Polyurethane diacrylate of polyester prepared from neopentylglycol and adipic acid and having a molecular weight of 1,000 (trademark: NPAA 1000, made by ARAKAWA KAGAKUKOGYO K.K.) | 50 |

(continued)

| Electron beam-curable resin composition 62 | |
|---|---|
| Component | Part by weight |
| Tripropyleneglycol diacrylate (Tg = 90°C) (trademark: M-220, made by TOA GOSEI K.K.) | 50 |

The test results are shown in Table 2.

Comparative Example 6

A composite sheet material was produced and tested by the same procedures as in Example 1, with the following exceptions.

The electron beam-curable resin composition 1 was replaced by an electron beam-curable resin composition 63 having the following composition.

| Electron beam-curable resin composition 63 | |
|---|---|
| Component | Part by weight |
| Polyurethane diacrylate of polypropyleneglycol having a molecular weight of 2,100 (trademark: PPG2000-U, made by ARAKAWA KAGAKUKOGYO K.K.) | 50 |
| Trimethylolpropane triacrylate (Tg > 250°C) (trademark: M-309, made by TOA GOSEI K.K.) | 50 |

The test results are shown in Table 2.

Comparative Example 7

A composite sheet material was produced and tested by the same procedures as in Example 1, with the following exceptions.

The electron beam-curable resin composition 1 was replaced by an electron beam-curable resin composition 64 having the following composition.

| Electron beam-curable resin composition 64 | |
|---|---|
| Component | Part by weight |
| Polyester tetraacrylate for wide use (trademark: EB810, made by DAICEL UCB K.K.) | 50 |
| Acryloylmorpholine (Tg = 140°C) (trademark: ACMO, made by KOJIN) | 50 |

The test results are shown in Table 2.

Comparative Example 8

A composite sheet material was produced and tested by the same procedures as in Example 1, with the following exceptions.

The electron beam-curable resin composition 1 was replaced by an electron beam-curable resin composition 65 having the following composition.

| Electron beam-curable resin composition 65 | |
|---|---|
| Component | Part by weight |
| Polyurethane hexaacrylate of hardened castor oil having a molecular weight of 1,000 (trademark: HIHA, made by ARAKAWA KAGAKUKOGYO K.K.) | 50 |
| p-cumylphenol EO-modified acrylate (Tg = 35°C) (trademark: Aronix To-1210, made by TOA GOSEI K.K.) | 50 |

The test results are shown in Table 2.

Comparative Example 9

A composite sheet material was produced and tested by the same procedures as in Example 1, with the following exceptions.

The electron beam-curable resin composition 1 was replaced by an electron beam-curable resin composition 66 having the following composition.

| Electron beam-curable resin composition 66 | |
|---|---|
| Component | Part by weight |
| Polyurethane hexaacrylate of polyolefindiol having a molecular weight of 2,000 (trademark: KU 511-13D, made by ARAKAWA KAGAKUKOGYO K.K.) | 50 |
| Dicyclopentenyl acrylate (Tg = 91°C) (trademark: FA-513A, made by HITACHI KASEI K.K.) | 50 |

Test results are shown in Table 2.

Comparative Example 10

A composite sheet material was produced and tested by the same procedures as in Example 1, with the following exceptions.

The electron beam-curable resin composition 1 was replaced by an electron beam-curable resin composition 67 having the following composition.

| Electron beam-curable resin composition 67 | |
|---|---|
| Component | Part by weight |
| Polyurethane hexaacrylate of polypropyleneglycol having a molecular weight of 2,000 (trademark: KUP 2001, made by ARAKAWA KAGAKUKOGYO K.K.) | 50 |
| N-vinylpyrrolidone (Tg = 135°C) (trademark: V-Pyrol, made by ISP) | 50 |

The test results are shown in Table 2.

Comparative Example 11

A composite sheet material was produced and tested by the same procedures as in Example 1, with the following exceptions.

The electron beam-curable resin composition 1 was replaced by an electron beam-curable resin composition 68 having the following composition.

| Electron beam-curable resin composition 68 | |
|---|---|
| Component | Part by weight |
| Polyester tetraacrylate for wide use (trademark: EB810, made by DAICEL UCB K.K.) | 50 |
| Methoxytriethyleneglycol acrylate (Tg = -50°C) (trademark: NEW FRONTIER ME-3, made by DAIICHI KOGYOSEIYAKU K.K.) | 50 |

The test results are shown in Table 2.

Comparative Example 12

A composite sheet material was produced and tested by the same procedures as in Example 1, with the following exceptions.

The electron beam-curable resin composition I was replaced by an electron beam-curable resin composition 69 having the following composition.

| Electron beam-curable resin composition 69 | |
|---|---|
| Component | Part by weight |
| Polyurethane hexaacrylate of polypropyleneglycol having a molecular weight of 2,000 (trademark: KUP 2001, made by ARAKAWA KAGAKUKOGYO K.K.) | 50 |
| Phenoxypolyethyleneglycol acrylate(Tg = -8°C) (trademark: LIGHT ACRYLATE P-200A, made by KYOEISHA KAGAKU K.K.) | 50 |

The test results are shown in Table 2.

Comparative Example 13

A composite sheet material was produced and tested by the same procedures as in Example 1, with the following exceptions.

The electron beam-curable resin composition 1 was replaced by an electron beam-curable resin composition 70 having the following composition.

| Electron beam-curable resin composition 70 | |
|---|---|
| Component | Part by weight |
| Polyurethane hexaacrylate of polyolefindiol having a molecular weight 2,000 (trademark: KU 511-13D, made by ARAKAWA KAGAKUKOGYO K.K.) | 50 |
| Lauryl acrylate (Tg = 15°C) (trademark: LA, made by OSAKA YUKI K.K.) | 50 |

The test results are shown in Table 2.

Comparative Example 14

A composite sheet material was produced and tested by the same procedures as in Example 1, with the following exceptions.

The electron beam-curable resin composition 1 was replaced by an electron beam-curable resin composition 71 having the following composition.

| Electron beam-curable resin composition 71 | |
|---|---|
| Component | Part by weight |
| Polyurethane hexaacrylate of polypropyleneglycol having a molecular weight of 2,000 (trademark: KUP 2001, made by ARAKAWA KAGAKUKOGYO K.K.) | 50 |
| Tripropyleneglycol diacrylate (Tg = 90°C) (trademark: M-220, made by TOA GOSEI K.K.) | 50 |

The test results are shown in Table 2.

Comparative Example 15

A composite sheet material was produced and tested by the same procedures as in Example 1, with the following exceptions.

The electron beam-curable resin composition 1 was replaced by an electron beam-curable resin composition 72 having the following composition.

| Electron beam-curable resin composition 72 | |
|---|---|
| Component | Part by weight |
| Polyester tetraacrylate for wide use (trademark: EB810, made by DAICEL UCB K.K.) | 50 |
| Trimethylolpropane triacrylate (Tg > 250°C) (trademark: M-309, made by TOA GOSEI K.K.) | 50 |

The test results are shown in Table 2.

Comparative Example 16

A cast coated paper sheet having a basis weight of 128 g/$m^2$ (trademark: MIRROR COAT GOLD, made by OJI PAPER CO., LTD.) was subjected to the same measurements (1) and (2) as in Example 1.

The cast coating surface of the paper sheet was tested.

The test results are shown in Table 2.

Table 2

| Example No. \ Item | | Gloss | Softness | |
|---|---|---|---|---|
| | | | Crack-resistance upon bending | Ultimate elongation (%) |
| Example | 38 | 84 | 4 | 105 |
| | 39 | 84 | 4 | 120 |
| | 40 | 82 | 4 | 110 |
| | 41 | 88 | 4 | 155 |
| | 42 | 90 | 4 | 180 |
| | 43 | 86 | 4 | 150 |
| | 44 | 88 | 4 | 180 |
| | 45 | 82 | 4 | 120 |
| | 46 | 88 | 4 | 140 |
| | 47 | 88 | 4 | 165 |
| | 48 | 82 | 4 | 120 |
| | 49 | 88 | 4 | 150 |
| | 50 | 92 | 4 | 175 |
| | 51 | 93 | 4 | 130 |
| | 52 | 90 | 4 | 110 |
| | 53 | 88 | 4 | 110 |
| | 54 | 86 | 4 | 120 |
| | 55 | 88 | 4 | 130 |
| | 56 | 85 | 4 | 110 |
| | 57 | 87 | 4 | 145 |
| Comparative Example | 1 | 80 | 1 | 25 |
| | 2 | 78 | 1 | <20 |
| | 3 | 72 | 1 | 30 |
| | 4 | 82 | 1 | <20 |
| | 5 | 82 | 1 | <20 |
| | 6 | 86 | 1 | <20 |
| | 7 | 92 | 1 | 20 |
| | 8 | 94 | 1 | <20 |
| | 9 | 90 | 1 | <20 |
| | 10 | 85 | 1 | <20 |
| | 11 | 90 | 1 | <20 |
| | 12 | 92 | 1 | <20 |
| | 13 | 85 | 1 | <20 |
| | 14 | 82 | 1 | <20 |
| | 15 | 82 | 1 | <20 |
| | 16 | 67 | 3 | - |

Tables 1 and 2 clearly show that the composite sheet materials of the present invention include electron beam-cured resin film having an ultimate elongation of 50% or more, a high softness and a white paper gloss, as shown in Examples 1 to 57.

In comparison with those, in the preparation of the electron beam-curable resin composition, when a mono-functional, electron beam-curable organic compound, which is converted to a homopolymer having a glass transition temperature (Tg) less than 20°C, is contained in the electron beam-curable resin composition, for example, in Comparative Examples 1 to 4; or when a multi-functional, electron beam-curable organic compound is used in place of the mono-functional compound as shown in Comparative Examples 5 and 6; or when a tri, or more, functional (meth)acrylate is used in place of the di(meth)acrylate, as shown in Comparative Examples 7 to 10; or when the mono-functional, electron beam-curable organic compound which can be converted to a homopolymer having a Tg of 20°C or more and is usable for the present invention is not employed and also, the di(meth)acrylate usable for the present invention is not used, as shown in Comparative Examples 11 to 15, the resultant composite sheet materials were provided with electron beam-cured resin coating layers having an ultimate elongation extremely lower than 100%, and thus exhibited a poor softness and could not be employed for practice. Also, the conventional cast coated paper sheet of Comparative Example 16 exhibited a very low white sheet gloss.

Example 58

A composite sheet material provided with an electron beam-cured resin composite coating layer having a multi layered laminate structure and exhibiting an excellent softness was produced by the following procedures.

| Electron beam-curable resin composition 73 (for forming an outermost resin coating layer) | |
|---|---|
| Component | Part by weight |
| Electron beam-curable unsaturated organic compound comprising as a main component, di-functional urethane-modified polyether acrylate (trademark: KU 511-23B, made by ARAKAWA KAGAKUKOGYO K.K.) | 65 |
| 2-butyl-2-ethylpropanediol diacrylate (trademark: KU-C9A, made by ARAKAWA KAGAKUKOGYO K.K.) | 50 |

The above-mentioned components were placed in a Caules dissolver and mixed and dispersed at 2,000 rpm for 20 minutes, to prepare an electron beam-curable resin composition 73.

An electron beam-curable resin composition having the same composition as of the electron beam-curable resin composition 3 mentioned in Example 3 was used for forming an inside resin coating layer.

Production of composite sheet material

The electron beam-curable resin composition 73 was coated on a surface of a coating base consisting of a polyester film having a thickness of 75 µm, by using a Mayer bar, to form an outermost coating liquid layer corresponding to an outermost cured resin coating layer having a weight of 5 g/m$^2$. Separately, the resin composition 3 was coated on a surface of a support sheet consisting of a coated paper sheet (trademark: OK TOPCOAT DUL, made by OJI PAPER LTD.) having a basis weight of 128 g/m$^2$, by using a Mayer bar, to form an inside coating liquid layer corresponding to an inside cured resin coating layer having a weight of 10 g/m$^2$.

The outermost coating liquid layer and the inside coating liquid layer directly faced each other and were superposed on each other to provide a superposed article. Then an electron beam was irradiated toward the outermost and inside coating liquid layers through the polyester film layer, under an acceleration voltage of 175 kV at an absorption dose of 3 Mrad in a nitrogen gas atmosphere containing 500 ppm or less of oxygen. The outermost and inside coating liquid layers were cured and firmly bonded to each other and to the support sheet, to form a composite sheet material. Then the polyester film was removed from the outermost cured resin coating layer. The resultant composite sheet material had a multilayered electron beam-cured resin coating layer.

Tests

Measurement of softness of composite sheet material

A sample of the composite sheet material is bent at a bending angle of 180 degrees in such a manner that the resin coating layer forms an outermost surface of the bent composite sheet material sample. The degree of cracking

created in the bent resin coating layer was observed and evaluated by the naked eye. The test results were evaluated as follows.

| Class | Degree of cracking |
|---|---|
| 3 | No crack was formed in the resin coating layer |
| 2 | A small number of cracks were formed in the resin coating layer |
| 1 | The resin coating layer was completely broken. |

In class 2 or 3, the resultant composite sheet material is usable for practice. However, the resultant composite sheet material evaluated in class 1 is not suitable for practice.

The test results are shown in Table 3.

Example 59

A composite sheet material was produced and tested by the same procedures as in Example 58, with the following exceptions.

The electron beam-curable resin composition 3 for the inside resin coating layer was replaced by the electron beam-curable resin composition 5 mentioned in Example 5.

The test results of the resultant composite sheet material are shown in Table 3.

Example 60

A composite sheet material was produced and tested by the same procedures as in Example 58, with the following exceptions.

The electron beam-curable resin composition 3 for the inside resin coating layer was replaced by the electron beam-curable resin composition 21 mentioned in Example 21.

The test results of the resultant composite sheet material are shown in Table 3.

Example 61

A composite sheet material was produced and tested by the same procedures as in Example 58, with the following exceptions.

The electron beam-curable resin composition 3 for the inside resin coating layer was replaced by the electron beam-curable resin composition 25 mentioned in Example 25.

The test results of the resultant composite sheet material are shown in Table 3.

Example 62

A composite sheet material was produced and tested by the same procedures as in Example 58, with the following exceptions.

The electron beam-curable resin composition 3 for the inside resin coating layer was replaced by the electron beam-curable resin composition 36 mentioned in Example 36.

The test results of the resultant composite sheet material are shown in Table 3.

Example 63

A composite sheet material was produced and tested by the same procedures as in Example 58, with the following exceptions.

The electron beam-curable resin composition 3 for the inside resin coating layer was replaced by the electron beam-curable resin composition 49 mentioned in Example 49.

The test results of the resultant composite sheet material are shown in Table 3.

Example 64

A composite sheet material was produced and tested by the same procedures as in Example 58, with the following exceptions.

The electron beam-curable resin composition 3 for the inside resin coating layer was replaced by the electron

beam-curable resin composition 55 mentioned in Example 55.

The test results of the resultant composite sheet material are shown in Table 3.

Comparative Example 17

A composite sheet material was produced and tested by the same procedures as in Example 58, with the following exceptions.

The electron beam-curable resin composition 3 for the inside resin coating layer was replaced by the electron beam-curable resin composition 58 mentioned in Comparative Example 1.

The test results of the resultant composite sheet material are shown in Table 3.

Comparative Example 18

A composite sheet material was produced and tested by the same procedures as in Example 58, with the following exceptions.

The electron beam-curable resin composition 3 for the inside resin coating layer was replaced by the electron beam-curable resin composition 59 mentioned in Comparative Example 2.

The test results of the resultant composite sheet material are shown in Table 3.

Comparative Example 19

A composite sheet material was produced and tested by the same procedures as in Example 58, with the following exceptions.

The electron beam-curable resin composition 3 for the inside resin coating layer was replaced by the electron beam-curable resin composition 62 mentioned in Comparative Example 5.

The test results of the resultant composite sheet material are shown in Table 3.

Comparative Example 20

A composite sheet material was produced and tested by the same procedures as in Example 58, with the following exceptions.

The electron beam-curable resin composition 3 for the inside resin coating layer was replaced by the electron beam-curable resin composition 64 mentioned in Comparative Example 4.

The test results of the resultant composite sheet material are shown in Table 3.

Comparative Example 21

A composite sheet material was produced and tested by the same procedures as in Example 58, with the following exceptions.

The electron beam-curable resin composition 3 for the inside resin coating layer was replaced by the electron beam-curable resin composition 66 mentioned in Comparative Example 9.

The test results of the resultant composite sheet material are shown in Table 3.

Comparative Example 22

A composite sheet material was produced and tested by the same procedures as in Example 58, with the following exceptions.

The electron beam-curable resin composition 3 for the inside resin coating layer was replaced by the electron beam-curable resin composition 70 mentioned in Comparative Example 13.

The test results of the resultant composite sheet material are shown in Table 3.

Comparative Example 23

A composite sheet material was produced and tested by the same procedures as in Example 58, with the following exceptions.

The electron beam-curable resin composition 3 for the inside resin coating layer was replaced by the electron beam-curable resin composition 72 mentioned in Comparative Example 15.

The test results of the resultant composite sheet material are shown in Table 3.

Table 3

| | | Softness |
|---|---|---|
| | | Crack-resistance of composite sheet material |
| Example | 58 | 2 |
| | 59 | 3 |
| | 60 | 3 |
| | 61 | 3 |
| | 62 | 3 |
| | 63 | 3 |
| | 64 | 3 |
| Comparative Example | 17 | 1 |
| | 18 | 1 |
| | 19 | 1 |
| | 20 | 1 |
| | 21 | 1 |
| | 22 | 1 |
| | 23 | 1 |

As Table 3 clearly shows, the composite sheet materials in accordance with the present invention having an electron beam-cured resin coating layer having a multi-layered structure and containing an inside resin coating layer consisting of from an electron beam-cured resin exhibited, as a whole, a high softness and thus even when the composite sheet material is bent, no crack was created in the resin coating layer as shown in Examples 58 to 64. Therefore, the composite sheet material is useful for practice.

Compared with these, in the preparation of the electron beam-curable resin composition for the inside resin coating layer, when a mono-functional, electron beam-curable organic compound which is converted to a homopolymer having a Tg of less than 20°C is employed in place of the organic compound usable for the present invention as shown in Comparative Examples 17 and 18; or when a multi-functional electron beam-curable organic compound is employed in place of the mono-functional, electron beam-curable organic compound as shown in Comparative Example 19; or when a tri-, or more, (meth)acrylate is employed in place of the di(meth)acrylate, as shown in Comparative Examples 20 and 21); or when both the mono-functional, electron beam-curable organic compound which is converted to a homopolymer having a Tg of 20°c or more and the di(meth)acrylate were not employed, as shown in Comparative Examples 22 and 23), the resultant electron beam-cured resin coating layer exhibit an unsatisfactory softness, and thus the resultant composite sheet material exhibits, as a whole, a low softness. Also when the resultant composite sheet material is bent, the bent resin coating layer is cracked and exhibit an unsatisfactory appearance. Therefore, the resultant comparative composite sheet materials were not suitable for practice.

The electron beam-curable resin composition of the present invention can be cured by an electron beam irradiation and forms a cured resin film having a high softness and a high resistance to cracking or splitting upon bending.

In the composite sheet material of the present invention, an electron beam-curable rein coating layer consisting of a resin film formed from the electron beam-curable resin composition by an electron beam irradiation, is formed on at least one surface of a support sheet. Therefore, the composite sheet material of the present invention exhibits, as a whole, an excellent softness, and even when the composite sheet material is bent, no crack is created in the bent resin coating layer. Also, the composite sheet material has a high white sheet gloss. Therefore, the composite sheet material of the present invention is useful for wide practice.

Also, in accordance with the present invention, an electron beam-cured resin coating layer or film having an ultimate elongation of 100% or more can be produced. This feature of the present invention is very important to provide a soft composite sheet material. Further, since the composite sheet material of the present invention has a high white sheet gloss and an excellent softness, the composite sheet material is useful as a support sheet for packaging materials and printing materials.

## Claims

1. An electron beam-curable resin composition comprising a first component comprising at least one mono-functional, electron beam-curable organic compound exhibiting, when polymerized into a homopolymer, a glass-transition temperature of 20°C or more, and a second component comprising at least one di(meth)acrylate compound.

2. The electron beam-curable resin composition as claimed in claim 1, wherein the mono-functional, electron beam-curable organic compound-containing first component comprises at least one member selected from the class consisting of:

(1) acryloylmorpholine;
(2) (meth)acrylates
a tricyclo[5,2,1,$0^{2,6}$] decane structure and having represented by the general formula (1):

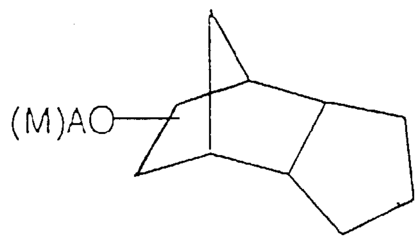

(1)

wherein (M)A represents a (meth)acryloyl group;
(3) cycloalkyl mono(meth)acrylates represented by the general formula (2):

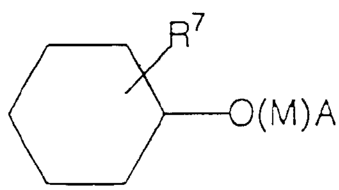

(2)

wherein $R^7$ represents a member selected from the class consisting of a hydrogen atom, and methyl, tert-butyl and cyclohexyl groups, and M(A) represents a (meth)acryloyl group;
(4) tert-alcohol mono-(meth)acrylates represented by the general formula (3):

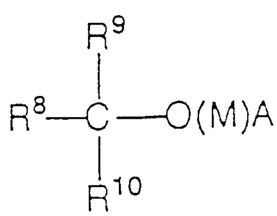

(3)

wherein $R^8$, $R^9$ and $R^{10}$ respectively and independently from each other represent a member selected from the class consisting of methyl and ethyl groups and M(A) represents a (meth)acryloyl group;
(5) (meth)acrylates having a succinic acid imido structure and represented by the general formula (4):

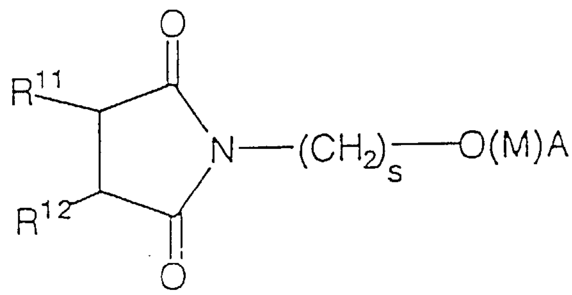

(4)

wherein $R^{11}$ and $R^{12}$ respectively represents a member selected from the class consisting of a hydrogen atom and hydro-carbon groups, which hydrocarbon groups represented by $R^{11}$ and $R^{12}$ are connected to each other to form, together with two carbon atoms located in the succinic acid imido structure and connected to $R^{11}$ and $R^{12}$, respectively, a member selected from the class consisting of cyclohexane and cyclohexene groups; s represents an integer of 2 to 3, and (M)A represents a (meth)acryloyl group;

(6) mono(meth)acrylates having a bis-phenol structure and represented by the general formula (5):

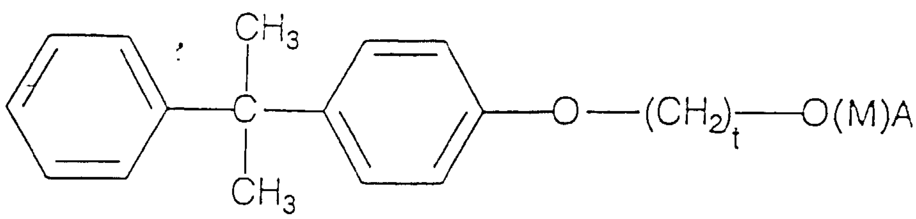

(5)

wherein t represents an integer of 2 to 3, and (M)A represents a (meth)acryloyl group;

(7) (meth)acrylates having a cyclic dicarboxylic acid monoester structure and represented by the general formula (6):

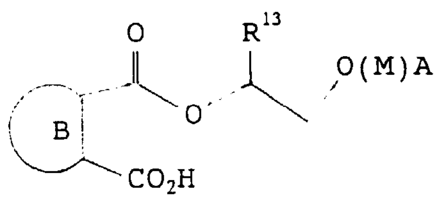

(6)

wherein $R^{13}$ represents a member selected from the class consisting of a hydrogen atom and a methyl group, a cyclic structure B represents a member selected from the class consisting of 5 to 8-membered saturated and unsaturated aliphatic and aromatic rings, and (M)A represents a (meth)acryloyl group; and

(8) N-vinyl lactam compounds represented by the formula (7):

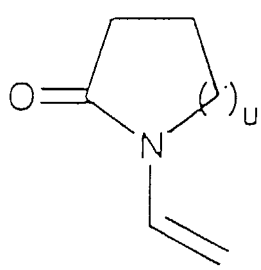

(7)

wherein u represents an integer of 1 or 3, and

the di(meth)acrylate-containing second component comprises at least one member selected from the

class consisting of:

(9) polyetherpolyurethane di(meth)acrylates having a polyether structure having a molecular weight of 500 to 10,000 and represented by the general formula (8):

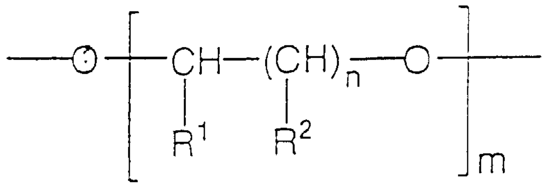

(8)

wherein $R^1$ and $R^2$ respectively and independently from each other represent a member selected from the group consisting of a hydrogen atom and alkyl group having l to 5 carbon atoms, n represents an integer of 0 or 1 to 9, m represents an integer satisfying the equation of

$$(n + 1) \times m = 20 \text{ to } 300,$$

and when n represents an integer of 2 or more, the two or more $R^2$ groups may be the same as or different from each other;

(10) polyesterpolyurethane di(meth)acrylates having a polyester structure having a molecular weight of 500 to 10,000 and represented by the general formula (9):

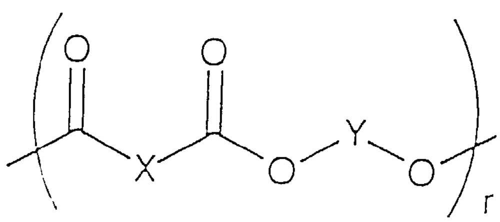

(9)

wherein X represents a residue of a dicarboxylic acid selected from the class consisting of straight chain, branched chain and cyclic aliphatic and aromatic discarboxylic acids and employed in the formation of the polyester structure, Y represents a residue of a diol selected from the class consisting of straight chain, branched chain and cyclic aliphatic and aromatic dioles and employed in the formation of the polyester structure, r represents an integer such that the resultant polyester structure satisfied the molecular weight of 500 to 10,000;

(11) di(meth)acrylates having a dimeric acid structure derived from a dimer of an unsaturated higher fatty acid and selected from those represented by the general formulae (10) and (11):

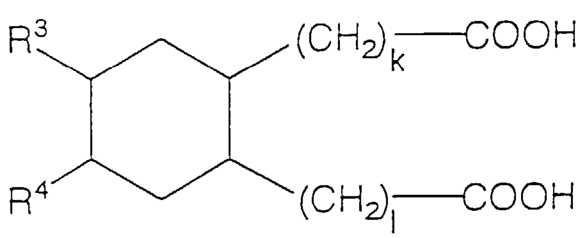

(10)

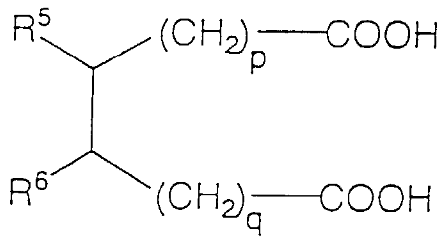

(11)

wherein $R^3$, $R^4$, $R^5$ and $R^6$ respectively and independently from each other represent an alkyl group, k, l, p and q respectively and independently from each other represent an integer of 1 or more, the total of the number of the carbon atoms of the $R^3$ group, the number of the carbon atoms of the $R^4$ group, and k and l is 28, and the total of the number of the carbon atoms of the $R^5$ group, the number of the carbon atoms of the $R^6$ group and p and q is 34, the di(meth)acrylate having a molecular weight of 500 to 10,000;

(12) polyolefinpolyurethane di(meth)acrylates having a polyolefin structure having a molecular weight of 500 to 10,000 and represented by the general formula (12);

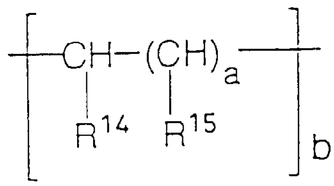

(12)

wherein $R^{14}$ and $R^{15}$ respectively and independently from each other represent a member selected from the class consisting of a hydrogen atom, and methyl and ethyl groups, a represents an integer of 1 or 2, when a represents an integer of 2, the two $R^{15}$ groups may be the same as or differed from each other, b represents an integer such that the resultant polyolefin structure satisfies the molecular weight of 500 to 10,000; and

(13) polyether di(meth)acrylates having a polyether structure represented by the general formula (13):

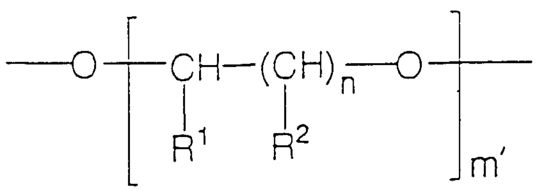

(13)

wherein $R^1$, $R^2$ and n are as defined above, and m' represents an integer satisfying the equation

$$(n + 1) \times m = 8 \text{ to } 200,$$

when n represents an integer of 2 or more, the two or more $R^2$ groups may be the same as or different from each other, the polyether di(meth)acrylates having a molecular weight of 150 to 5,000.

**3.** The electron beam-curable resin composition as claimed in claim 2, wherein the mono-functional, electron beam-curable organic compound-coating first component comprises acryloylmorpholine, and the di(meth)acrylate-containing second component comprises at least one member selected from the class consisting of the polyetherpolyurethane di(meth)acrylates having the polyether structure having a molecular weight of 500 to 10,000 and represented by the general formula (8);

the polyesterpolyurethane di(meth)acrylates having the polyester structure having a molecular weight of 500 to 10,000 and represented by the general formula (9);
and the di(meth)acrylates having a molecular weight of 500 to 10,000 and provided with a dimeric acid structure represented by a member selected from the general formulae (10) and (11) and derived from a dimer of an unsaturated higher fatty acid.

**4.** The electron beam-curable resin composition as claimed in claim 2, wherein the mono-functional, electron beam-curable organic compound-containing first component comprises a mono(meth)acrylate having a tricyclo [5,2,1,$0^{2,6}$] decane structure represented by the formula (1),

and the di(meth)acrylate-containing second component comprises at least one member selected from the class consisting of the polyetherpolyurethane di(meth)acrylates having the polyether structure having the molecular weight of 500 to 10,000 and represented by the formula (8);
the polyesterpolyurethane di(meth)acrylates having the polyester structure represented by the general formula (9) and having the molecular weight of 500 to 10,000; and the polyolefin polyurethane di(meth)acrylates having the polyolefin structure represented by the formula (12) and having the molecular weight of 500 to 10,000.

**5.** The electron beam-curable resin composition as claimed in claim 2, wherein the mono-functional, electron beam-curable organic compound-containing first component comprises a cycloalkyl mono(meth)acrylate represented by the general formula (2);

and the di(meth)acrylate-containing second component comprises at least one member selected from the class consisting of the polyetherpolyurethane di(meth)acrylates having the polyester structure represented by the general formula (8) and having the molecular weight of 500 to 10,000, the polyesterpolyurethane di(meth) acrylates having the polyester structure represented by the general formula (9) and having the molecular weight of 500 to 10,000, and the polyolefinpolyurehtane di(meth)acrylates having the polyolefin structure represented by the general formula (12) and having the molecular weight of 500 to 10,000.

**6.** The electron beam-curable resin composition as claimed in claim 2, wherein the mono-functional, electron beam-curable organic compound-containing first component comprises a mono(meth)acrylate of a tert-alcohol, represented by the general formula (3);

and the di(meth)acrylate-containing second component comprises at least one member selected from the class consisting of the polyetherpolyurethane di(meth)acrylate having the polyether structure represented by the general formula (8) and having a molecular weight of 500 to 10,000, the polyetherpolyurethane di(meth) acrylate having the polyether structure represented by the general formula (9) and having the molecular weight of 500 to 10,000, and the polyolefinpolyurethane di(meth)acrylates having the polyolefin structure represented by the general formula (12) and having the molecular weight of 500 to 10,000.

**7.** The electron beam-curable resin composition as claimed in claim 2, wherein the mono-functional, electron beam-curable organic compound-containing first component comprises a mono(meth)acylate having the succinimide structure and represented by the general formula (4);

and the di(meth)acrylate-containing second component comprises at least one member selected from the class consisting of the polyetherpolyurethane di(meth)acrylate having the polyether structure represented by the general formula (8) and having a molecular weight of 500 to 10,000, the polyesterpolyurethane di(meth) acrylate having the polyester structure represented by the general formula (9) and having the molecular weight of 500 to 10,000, and the di(meth)acrylates provided with a dimeric acid structure derived from a dimer of an unsaturated higher fatty acid and selected from those represented by the general formulae (10) and (11), and having a molecular weight of 500 to 10,000.

**8.** The electron beam-curable resin composition as claimed in claim 2, wherein the mono-functional, electron beam-curable organic compound-containing first component comprises a mono(meth)acylate having a bisphenol structure and represented by the general formula (5);

and the di(meth)acrylate-containing second component comprises at least one member selected from the class consisting of the polyetherpolyurethane di(meth)acrylate having the polyether structure represented by the general formula (8) and having a molecular weight of 500 to 10,000, the polyesterpolyurethane di(meth)acrylate having the polyether structure represented by the general formula (9) and having the molecular weight of 500 to 10,000, and the polyolefinpolyurethane di(meth)acrylates having the polyolefin structure represented by the general formula (12) and having a molecular weight of 500 to 10,000.

9. The electron beam-curable resin composition as claimed in claim 2, wherein the mono-functional, electron beam-curable organic compound-containing first component comprises a mono(meth)acylate having a cyclic dicarboxylic acid monoester structure and represented by the general formula (6);

   and the di(meth)acrylate-containing second component comprises at least one member selected from the class consisting of the polyetherpolyurethane di(meth)acrylate having the polyether structure represented by the general formula (8) and having a molecular weight of 500 to 10,000, and the polyesterpolyurethane di (meth)acrylate having the polyester structure represented by the general formula (9) and having the molecular weight of 500 to 10,000.

10. The electron beam-curable resin composition as claimed in claim 2, wherein the mono-functional, electron beam-curable organic compound-containing first component comprises a N-vinyllactam compound represented by the general formula (7);

   and the di(meth)acrylate-containing second component comprises at least one member selected from the class consisting of the polyetherpolyurethane di(meth)acrylate having the polyether structure represented by the general formula (8) and having a molecular weight of 500 to 10,000, the polyesterpolyurethane di(meth) acrylate having the polyester structure represented by the general formula (9) and having the molecular weight of 500 to 10,000, and the di(meth)acrylates provided with a dimeric acid structure derived from a dimer of an unsaturated higher fatty acid and selected from those represented by the general formulae (10) and (11), and having a molecular weight of 500 to 10,000.

11. The electron beam-curable resin composition as claimed in any of claims 1 to 10, wherein the mixing ratio in weight of the mono-functional, electron beam-curable organic compound-containing first component to the di(meth)acrylate-containing second component is in the range of from 10/90 to 90/10.

12. The electron beam-curable resin composition as claimed in claim 2, wherein the mono-functional, electron beam-curable organic compound-containing first component comprises acryloylmorpholine, and the di(meth)acrylate-containing second component comprises a polyether di(meth)acrylate provided with the polyether structure represented by the formula (13) and having the molecular weight of 150 to 5,000, the mixing ratio in weight of acryloylmorpholine to the polyether di(meth)acrylate being in the range of from 51/49 to 90/10.

13. An electron beam-cured resin film comprising a electron beam-cured product of the electron beam-curable resin composition as claimed in any of claims 1 to 12.

14. The electron beam-cured resin film as claimed in claim 13, having an ultimate elongation of 100% or more.

15. A composite sheet material comprising a support sheet and an electron beam-cured resin coating layer formed on at least one surface of the support sheet and comprising an electron beam-cured product of the electron beam-curable resin composition as claimed in any of claims 1 to 12.

16. The composite sheet material as claimed in claim 15, wherein the electron beam-cured product of the electron beam-curable resin composition has an ultimate elongation of 50% or more.

17. The composite sheet material comprising a support sheet and an electron beam-cured resin composite coating layer formed, on at least one surface of the support sheet and comprising a laminate of a plurality of resin layers including at least an inside resin layer located adjacent to the support sheet and an outermost resin layer located outermost of the composite sheet material, at least one of the plurality of resin layers in the electron beam-cured resin composite coating layer comprising an electron beam-cured product of the electron beam-curable resin composition as claimed in any of claims 1 to 12.

18. The composite sheet material as claimed in claim 17, wherein the resin layer comprising the electron beam-cured product of the electron beam-curable resin composition has an ultimate elongation of 50% or more.